# EUROPEAN PATENT SPECIFICATION

(11) **EP 4 152 357 B1**
(45) Date of publication and mention of the grant of the patent: **25.03.2026**
(21) Application number: 21809515.6
(22) Date of filing: 20.05.2021
(51) Int. Cl.: H01H 71/10, H01H 71/08, H02B 1/04, H01H 71/12, H01H 71/24, H01H 71/50

(54) **CIRCUIT BREAKER, AND POWER DISTRIBUTION SYSTEM**
SCHUTZSCHALTER UND STROMVERTEILUNGSSYSTEM
DISJONCTEUR ET SYSTÈME DE DISTRIBUTION DE PUISSANCE

(30) Priority: 21.05.2020 CN 202010437646
(43) Date of publication of application: 22.03.2023
(73) Proprietor: Huawei Technologies Co., Ltd., Longgang District, Shenzhen, Guangdong 518129 (CN)
(72) Inventor: YAN, Guangchao, Shenzhen, Guangdong 518129 (CN); CAO, Guoqing, Wenzhou, Zhejiang 325606 (CN); XIAO, Zhiming, Shenzhen, Guangdong 518129 (CN); WANG, Zuofeng, Wenzhou, Zhejiang 325606 (CN); WANG, Keying, Shenzhen, Guangdong 518129 (CN)
(74) Representative: Gill Jennings & Every LLP
(86) International application number: PCT/CN2021/095001
(87) International publication number: WO 2021/233399

(56) References cited:
- CN-A- 104 143 469
- CN-A- 110 491 739
- CN-U- 201 689 845
- CN-U- 209 298 044
- CN-U- 210 575 787
- CN-U- 213 366 507
- JP-A- 2008 269 937

## Description

This application claims priority to Chinese Patent Application No. 202010437646.1, filed with the China National Intellectual Property Administration on May 21, 2020 and entitled "CIRCUIT BREAKER AND POWER DISTRIBUTION SYSTEM".

### TECHNICAL FIELD

This application relates to the field of electrical device technologies, and in particular, to a circuit breaker and a power distribution system.

### BACKGROUND

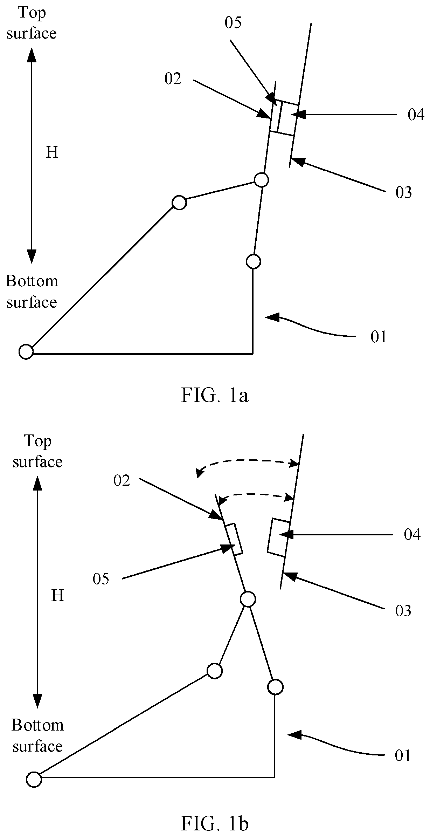

Safety and operation reliability of an electrical device can be effectively improved by using a circuit breaker. With reference to FIG. 1a and FIG. 1b, a user may operate a button (not shown in the figures) located outside a circuit breaker to drive a link mechanism 01 to move, so as to control a movable contact plate 02 and a fixed contact plate 03 to perform switch-on or switch-off. FIG. 1a shows a switched-on state. FIG. 1b shows a switched-off state.

In structures shown in FIG. 1a and FIG. 1b, during switching from the switched-on state to the switched-off state, in a transition process in which the circuit breaker switches from having a current to having no current, an electric arc (which is denoted by a dashed line with arrows in FIG. 1b) discharged in a direction toward a top surface of the circuit breaker is produced between the movable contact plate 02 and the fixed contact plate 03. Usually, a flashover distance is greater than 35 mm. To be specific, no other components can be disposed within 35 mm from a movable contact 05 and a fixed contact 04 that are in contact. A circuit breaker used for a communication device usually conforms to a metering standard along a height direction (an H direction shown in FIG. 1a and FIG. 1b), and the metering standard is usually xU, where 1 U = 44.45 mm. If an electric arc is discharged in a direction toward a top surface of the circuit breaker, the circuit breaker has a large size along the height direction. The circuit breaker is usually mounted in a power distribution unit. When the circuit breaker has a large size along the height direction, a height size of the power distribution unit is large, and therefore space occupied by the power distribution unit in a communication cabinet is increased.

CN 210 575 787 U discloses an operating system of a circuit breaker and the circuit breaker, and relates to the technical field of electrical equipment. The first rotating shaft is rotatably connected with the operating mechanism, the second rotating shaft is rotatably connected with the moving contact, and the fixed rotating shaft and the moving contact are coaxially and rotatably connected with the shell. The static contact and the moving contact are correspondingly arranged; the operating mechanism is located at one end of the shell. When the operating mechanism operates from one end of the shell to the other end (the first direction), the moving contact is driven by the rotating piece to deflect in the second direction (the first direction and the second direction are intersected).

### SUMMARY

Embodiments of this application provide a circuit breaker and a power distribution system, mainly to provide a circuit breaker in which an electric arc is discharged in a direction toward a rear side of the circuit breaker, so as to reduce a size in a height direction.

To achieve the foregoing objectives, the following technical solutions are used in embodiments of this application.

According to a first aspect, this application provides a circuit breaker, including a housing, and a link mechanism, a movable contact plate, and a fixed contact plate that are disposed in the housing. The link mechanism is connected to the movable contact plate to control the movable contact plate and the fixed contact plate to switch between a switched-on state and a switched-off state. The link mechanism includes a fixing plate, a crank arm, a jumper subboard assembly, and a diversion plate. The crank arm is hinged to the fixing plate. The jumper subboard assembly is hinged to the crank arm. The diversion plate is separately hinged to the jumper subboard assembly, to the movable contact plate, and through a rotating shaft, to the fixing plate. A hinge joint between the diversion plate and the jumper subboard assembly, a hinge joint between the diversion plate and the movable contact plate, and a hinge joint between the diversion plate and the fixing plate are arranged in a triangular shape. The movable contact plate has a strip-shaped hole. A surface on which the movable contact plate and the fixed contact plate come into contact is a contact plane. An extension direction of the strip-shaped hole is not parallel to the contact plane. The rotating shaft passes through the strip-shaped hole, and the movable contact plate can move relative to the rotating shaft along the extension direction of the strip-shaped hole.

Compared with a conventional technology, in the circuit breaker provided in this application, a diversion plate is added because the link mechanism includes the fixing plate, the crank arm, the jumper subboard assembly, and the diversion plate. The diversion plate is hinged to the jumper subboard assembly, the movable contact plate, and the fixing plate, and the hinge joint between the diversion plate and the jumper subboard assembly, the hinge joint between the diversion plate and the movable contact plate, and the hinge joint between the diversion plate and the fixing plate are arranged in a triangular shape. In addition, the strip-shaped hole not parallel to the contact plane is provided on the movable contact plate. In this way, a rotation angle and a rotation direction of the movable contact plate can be limited. When the link mechanism is arranged along a length direction of the circuit breaker, that is, when the movable contact plate and the fixed contact plate are close to a rear side of the housing, the extension direction of the strip-shaped hole is arranged to be not parallel to the contact plane. In this way, when a movable contact is detached from a fixed contact, due to limitation by the strip-shaped hole, the movable contact does not rotate to a direction toward the top of the housing, but rotates toward the rear side of the housing, so that gas produced by an electric arc during switch-off is also discharged toward a rear side of the circuit breaker. Therefore, in this application, the diversion plate is added to achieve an objective of discharging an electric arc toward the rear side of the circuit breaker. Compared with discharging an electric arc toward the top of the circuit breaker, this correspondingly reduces a size of the circuit breaker in a height direction. Usually, the rear side of the circuit breaker is not connected to other devices. This can also prevent discharged gas from causing damage to a device adjacent to the circuit breaker.

In a possible implementation of the first aspect, the extension direction of the strip-shaped hole is perpendicular to the contact plane. The extension direction of the strip-shaped hole is perpendicular to the contact plane, thereby ensuring that the movable contact plate performs rotational movement relative to the diversion plate when the movable contact plate and the fixed contact plate are in a switched-off stage, a switched-on stage, an overstroke stage, or a clear distance stage, ensuring stability of an overstroke and a clear distance of the movable contact plate, and improving operation stability of the entire circuit breaker.

According to the first aspect, the diversion plate includes a first plate and a second plate that are opposite to each other. The first plate and the second plate are connected by using a connecting plate. The first plate and the second plate each are provided with a first hinge hole, a second hinge hole, and a third hinge hole that are arranged in a triangular shape. The rotating shaft passes through the first hinge hole on the first plate and the first hinge hole on the second plate, and passes through the strip-shaped hole on the movable contact plate. A first hinge shaft is disposed in the second hinge hole, and is hinged to the jumper subboard assembly. A second hinge shaft is disposed in the third hinge hole, and is hinged to the movable contact plate. The diversion plate has a simple structure and a simple manufacturing process, and adding the diversion plate in the link mechanism does not increase manufacturing difficulty.

According to the first aspect, a part, of the movable contact plate, that is hinged to the diversion plate is located between the first plate and the second plate that are opposite to each other, and a part, of the jumper subboard assembly, that is hinged to the diversion plate is located between the first plate and the second plate that are opposite to each other. The part, of the movable contact plate, that is hinged to the diversion plate is located between the first plate and the second plate that are opposite to each other, and the part, of the jumper subboard assembly, that is hinged to the diversion plate is located between the first plate and the second plate that are opposite to each other, so that space between the first plate and the second plate is properly utilized, and other locations in the housing are not occupied.

In a possible implementation of the first aspect, the housing has a bottom surface and a top surface that are opposite to each other, and a front side surface and a rear side surface that are located between the bottom surface and the top surface and that are opposite to each other. The crank arm, the jumper subboard assembly, the diversion plate, and the movable contact plate are arranged in a direction from the front side surface to the rear side surface. An electric arc produced when the movable contact plate is detached from the fixed contact plate can be discharged to the rear side surface. An exhaust hole is provided on the rear side surface. The exhaust hole is configured to discharge gas produced by the electric arc when the movable contact plate is detached from the fixed contact plate. The crank arm, the jumper subboard assembly, the diversion plate, and the movable contact plate are arranged in the direction from the front side surface to the rear side surface, so that the electric arc produced when the movable contact plate is detached from the fixed contact plate is discharged in a direction toward the rear side surface of the housing, and the gas produced by the electric arc is discharged through the exhaust hole provided on the rear side surface of the housing.

In a possible implementation of the first aspect, the circuit breaker further includes an arc chute and an arc strike plate. The arc chute is disposed at a location, in the housing, that corresponds to the movable contact plate, and is close to the rear side surface of the housing. The arc strike plate is disposed on a side, of the arc chute, that is close to the bottom surface. The arc strike plate includes a flat section and a bent section. The flat section is mounted on the fixed contact plate, and the bent section is bent in a direction toward the arc chute. The arc strike plate includes the flat section and the bent section, and the bent section is bent in the direction toward the arc chute, so that an electric arc splashing onto the bent section is reflected to the arc chute through the bent section, to prevent the electric arc from splashing to other locations in the housing, and protect components in the housing, thereby increasing a service life of the circuit breaker.

In a possible implementation of the first aspect, the circuit breaker further includes an arc absorption plate. The arc absorption plate is disposed on a side, of the arc chute, that is close to the top surface. The arc absorption plate is made of a metal material, and a filter hole is provided on the arc absorption plate. Charged particles in the electric arc are filtered through the filter hole on the arc absorption plate, to prevent the charged particles from being discharged through the exhaust hole and affecting another device.

In a possible implementation of the first aspect, the arc absorption plate includes a first filter plate and a second filter plate that are folded toward each other, and mesh holes on the first filter plate and mesh holes on the second filter plate are staggered. To be specific, a mesh hole on the first filter plate faces a non-mesh-hole location on the second filter plate, and a non-mesh-hole location on the first filter plate faces a mesh hole on the second filter plate. Charged particles discharged out of the housing can be further reduced through double filtering by the first filter plate and the second filter plate.

In a possible implementation of the first aspect, the circuit breaker further includes: a clip, capable of moving relative to the housing along a first direction between a protruded location and a retracted location, where when the clip is at the protruded location, the clip is located outside the housing and is configured to snap into a power distribution unit, or when the clip is at the retracted location, the clip is located inside the housing, to be detached from the power distribution unit; a traction part, capable of moving relative to the housing along a second direction, where the second direction is perpendicular to the first direction, the traction part has a first end and a second end that are opposite to each other, the first end is located inside the housing, the second end is located outside the housing, and when the clip is at the protruded location, the first end presses against the clip, or when the clip is at the retracted location, the first end is detached from the clip; a first elastic part, capable of applying an elastic force to the traction part, so that the first end presses against the clip and applies a pushing force toward the outside of the housing to the clip; and a second elastic part, capable of applying an elastic force to the clip, where when the traction part is pulled and the first end is detached from the clip, the second elastic part can make the clip restore from the retracted location to the protruded location.

Under a pulling force applied by the first elastic part to the traction part, the traction part applies a pushing force to the clip, and the clip is at the protruded location, that is, the clip can snap into the power distribution unit. When the traction part is pulled toward the outside of the housing, the pushing force applied by the traction part to the clip disappears, and the clip moves to the retracted location. Under the action of the second elastic part, the clip can restore from the retracted location to the protruded location, to perform next snapping. Therefore, snap-fit plug can be implemented between the circuit breaker provided in this embodiment of this application and the power distribution unit. Compared with a manner of fastening by using a connector such as a bolt, in this implementation, assembly and disassembly are convenient, thereby particularly facilitating onsite replacement and maintenance for the circuit breaker.

In a possible implementation of the first aspect, the clip includes a first clip and a second clip. The first clip and the second clip are arranged opposite to each other on two sides of the traction part. An end, located in the housing, of the first clip is connected to an end, located in the housing, of the second clip through the second elastic part. The first clip and the second clip are arranged opposite to each other, so that snap-fit between the circuit breaker and the power distribution unit is more secure.

In a possible implementation of the first aspect, a plug hole is provided on the housing. The plug hole is used for plugging a clamping plate of the power distribution unit. A third elastic part is disposed in the plug hole, and elastic deformation of the third elastic part can enable the clamping plate to be clamped into the plug hole. The plug hole is provided on the housing, and the third elastic part is disposed in the plug hole, so that plugging between the circuit breaker and the power distribution unit is implemented, and strength of connection between the circuit breaker and the power distribution unit can be further improved.

In a possible implementation of the first aspect, a first wire entry terminal, a second wire entry terminal, a first wire exit terminal, a second wire exit terminal, a first conversion terminal, and a second conversion terminal are provided on the housing, where the first conversion terminal is configured to be electrically connected to a first conversion terminal of another circuit breaker by using a first conversion metal sheet, and the second conversion terminal is configured to be electrically connected to a second conversion terminal of the another circuit breaker by using a second conversion metal sheet; and a first metal busbar and a second metal busbar are disposed in the housing, where the first metal busbar is electrically connected to the first wire entry terminal, the first conversion terminal, and a local output terminal located in the housing, and the second metal busbar is electrically connected to the second wire entry terminal, the second conversion terminal, and the fixed contact plate.

The first metal busbar is electrically connected to the first wire entry terminal, the first conversion terminal, and the local output terminal located in the housing, and the second metal busbar is electrically connected to the second wire entry terminal, the second conversion terminal, and the fixed contact, to form a 1P+N (an N pole is directly connected) circuit breaker. In addition, the first conversion terminal and the second conversion terminal are disposed in the circuit breaker, the first conversion terminal may be electrically connected to a first conversion terminal of another circuit breaker (referred to as a second circuit breaker) directly by using the first conversion metal sheet, and the second conversion terminal may be electrically connected to a second conversion terminal of the second circuit breaker directly by using the second conversion metal sheet, to distribute a current to the second circuit breaker, thereby implementing a current distribution function. Compared with a conventional technology in which a power distribution unit is electrically connected to a connector and then connected to circuit breakers by using conversion copper bars with different structures to implement current distribution, in the circuit breaker provided in this embodiment of this application, first, no connector is required for implementing current distribution; and second, no conversion copper bars with different structures are required for connecting a connector and circuit breakers, but the first conversion metal sheet and the second conversion metal sheet are used to connect every two circuit breakers, thereby implementing current distribution.

In a possible implementation of the first aspect, the first wire entry terminal, the second wire entry terminal, the first conversion terminal, and the second conversion terminal are all provided on the top surface, and the first wire exit terminal and the second wire exit terminal are provided on the front side surface. During specific use, when the circuit breaker is mounted in a power distribution unit located in a network cabinet, the power distribution unit is at a location close to the top of the network cabinet, a first entry wire and a second entry wire are led in from the top of the network cabinet and are directly electrically connected to the first wire entry terminal and the second wire entry terminal that are located on the top surface (to form upper wire entry), and a load connecting wire is directly electrically connected to the first wire exit terminal and the second wire exit terminal that are located on the front side surface (to form front wire exit). Compared with conventional upper wire entry (the first wire entry terminal and the second wire entry terminal are located on an upper surface of the housing) and lower wire exit (the first wire exit terminal and the second wire exit terminal are located on a lower surface of the housing), this reduces a size along a height direction of the power distribution unit in the network cabinet. Compared with conventional rear wire entry (the first wire entry terminal and the second wire entry terminal are located on a side surface of the housing) and rear wire exit (the first wire exit terminal and the second wire exit terminal are also located on a side surface of the housing), this avoids a phenomenon that an entry wire connected to the power distribution unit is bent during wiring and therefore occupies more mounting space. Therefore, the circuit breaker provided in this embodiment of this application occupies smaller mounting space.

In a possible implementation of the first aspect, the circuit breaker further includes a first fastener and/or a second fastener. The first fastener is configured to fasten the first conversion metal sheet to the first conversion terminal, and can fasten the first entry wire to the first wire entry terminal. The second fastener is configured to fasten the second conversion metal sheet to the second conversion terminal, and can fasten the second entry wire to the second wire entry terminal. The first fastener can fasten the first conversion metal sheet and the first entry wire, and the second fastener can fasten the second conversion metal sheet and the second entry wire, to improve mounting efficiency.

In a possible implementation of the first aspect, the first fastener includes a first screw rod, a first metal clamping bar, and a first metal wire frame. A first end of two opposite ends of the first screw rod is located outside the housing, a second end extends into the housing through a through hole on a first terminal of the first metal busbar, and the first terminal of the first metal busbar is a terminal, inserted into the first conversion terminal, of the first metal busbar. The first metal clamping bar is disposed at a location close to the first end of the first screw rod, the first metal clamping bar is fixed relative to the first screw rod, and the first metal clamping bar is located between the first terminal of the first metal busbar and the first end of the first screw rod. The first metal wire frame is disposed at a location close to the second end of the first screw rod, a cavity is formed in the first metal wire frame, and a second terminal of the first metal busbar extends into the cavity, so that the cavity forms a first cavity and a second cavity. The second end of the first screw rod extends into the first cavity through the first metal wire frame, and the first metal wire frame and the first screw rod are in threaded fit. The second cavity can allow insertion of the first entry wire. The second terminal of the first metal busbar is a terminal, inserted into the first wire entry terminal, of the first metal busbar. When the first end of the first screw rod rotates, the first screw rod can drive the first metal clamping bar to move to press against the first conversion metal sheet inserted into the first conversion terminal, and can also drive the first metal wire frame to move to press against the first entry wire inserted into the first wire entry terminal. That is, the first conversion metal sheet and the first entry wire are fastened through rotation of the first screw rod.

In a possible implementation of the first aspect, the circuit breaker further includes a first insulation baffle plate. The first insulation baffle plate is connected to the first metal clamping bar. When the first screw rod moves along an extension direction of the first screw rod, the first metal clamping bar and the first insulation baffle plate can be driven to move synchronously, so that the first insulation baffle plate moves and covers an opening of the first conversion terminal. When the first conversion metal sheet is not inserted, the first insulation baffle plate can cover the first conversion terminal, thereby improving safety performance of the circuit breaker.

According to a second aspect, this application provides a power distribution system, including a power distribution unit and a plurality of circuit breakers according to any one of the first aspect or the implementations of the first aspect. The plurality of circuit breakers are disposed in the power distribution unit, and the plurality of circuit breakers are arranged side by side.

In the power distribution system provided in this application, the circuit breakers are the circuit breaker according to any implementation of the first aspect, and a link mechanism of the circuit breaker not only includes a fixing plate, a crank arm, and a jumper subboard assembly, but also includes a diversion plate. The diversion plate is disposed, and a strip-shaped hole is provided on a movable contact plate, to limit a rotation angle and a rotation direction of the movable contact plate. Therefore, when the link mechanism is arranged along a length direction of the circuit breaker, that is, when the movable contact plate and a fixed contact plate are close to a rear side of a housing, an extension direction of the strip-shaped hole is arranged to be not parallel to a contact plane. In this way, when a movable contact is detached from a fixed contact, due to limitation by the strip-shaped hole, the movable contact does not rotate to a direction toward the top of the housing, but rotates toward the rear side of the housing, so that gas produced by an electric arc during switch-off is also discharged toward a rear side of the circuit breaker. This reduces space occupied by a flashover in a height direction, thereby miniaturizing the power distribution system.

In a possible implementation of the second aspect, the housing has a bottom surface and a top surface that are opposite to each other, and a front side surface and a rear side surface that are located between the bottom surface and the top surface and that are opposite to each other. The crank arm, the jumper subboard assembly, the diversion plate, and the movable contact plate are arranged in a direction from the front side surface to the rear side surface. The rear side surface of the housing faces a rear wall of the power distribution unit. The crank arm, the jumper subboard assembly, the diversion plate, and the movable contact plate are arranged in the direction from the front side surface to the rear side surface, so that an electric arc produced when the movable contact plate is detached from the fixed contact plate is discharged in a direction toward the rear side surface of the housing.

In a possible implementation of the second aspect, when a first wire entry terminal, a second wire entry terminal, a first wire exit terminal, a second wire exit terminal, a first conversion terminal, and a second conversion terminal are provided on the housing, the power distribution unit is electrically connected to the first wire entry terminal through a first entry wire, and is electrically connected to the second wire entry terminal through a second entry wire. The power distribution system further includes: a first conversion metal sheet, electrically connected to first conversion terminals of two adjacent circuit breakers; and a second conversion metal sheet, electrically connected to second conversion terminals of the two adjacent circuit breakers. The first conversion metal sheet and the second conversion metal sheet implement current distribution, so that the circuit breaker does not need to be connected to an external connector that performs a current distribution function, thereby simplifying a structure of the entire power distribution system.

### BRIEF DESCRIPTION OF DRAWINGS

FIG. 1a is a schematic diagram of an operating status of a switched-on circuit breaker in a conventional technology;
FIG. 1b is a schematic diagram of an operating status of a switched-off circuit breaker in a conventional technology;
FIG. 2 is a schematic diagram of an operating status of a circuit breaker according to an embodiment of this application;
FIG. 3 is a schematic diagram of another operating status of a circuit breaker according to an embodiment of this application;
FIG. 4 is a schematic diagram of another operating status of a circuit breaker according to an embodiment of this application;
FIG. 5 is a schematic diagram of a structure of a movable contact plate according to an embodiment of this application;
FIG. 6 is a schematic diagram of a structure of a diversion plate according to an embodiment of this application;
FIG. 7 is a schematic diagram of a connection relationship between a link mechanism and a movable contact plate according to an embodiment of this application;
FIG. 8 is a schematic diagram of an internal structure of a circuit breaker according to an embodiment of this application;
FIG. 9 is a schematic diagram of a connection relationship between an arc chute, an arc strike plate, and an arc absorption plate according to an embodiment of this application;
FIG. 10 is a schematic diagram of a location relationship between an arc strike plate and an arc chute according to an embodiment of this application;
FIG. 11 is a schematic diagram of a structure of an arc absorption plate according to an embodiment of this application;
FIG. 12 is a schematic diagram of an outline structure of a circuit breaker according to an embodiment of this application;
FIG. 13 is a schematic diagram of an internal structure of a circuit breaker according to an embodiment of this application;
FIG. 14 is a schematic diagram of an internal structure of a circuit breaker according to an embodiment of this application;
FIG. 15 is a schematic diagram of a structure of a first metal busbar according to an embodiment of this application;
FIG. 16 is a schematic diagram of a connection relationship between a first screw rod, a first metal wire frame, a first metal busbar, and a first metal clamping bar according to an embodiment of this application;
FIG. 17 is another view of FIG. 16;
FIG. 18 is a schematic diagram of a connection relationship between a clip, a traction part, a first elastic part, and a second elastic part according to an embodiment of this application; and
FIG. 19 is a schematic diagram of a structure of a power distribution system according to an embodiment of this application.

Reference numerals:
01: link mechanism; 02: movable contact plate; 03: fixed contact plate; 04: fixed contact; 05: movable contact; 1: link mechanism; 11: fixing plate; 12: crank arm; 13: jumper subboard assembly; 131: jumper subboard; 132: jumper subboard support; 133: lock axle shaft; 14: diversion plate; 141: first plate; 142: second plate; 143: connecting plate; 144: first hinge hole; 145: second hinge hole; 146: third hinge hole; 15: first hinge shaft; 16: second hinge shaft; 17: rotating shaft; 2: movable contact plate; 201: strip-shaped hole; 3: fixed contact plate; 4: housing; 401: bottom surface; 402: top surface; 403: front side surface; 404: rear side surface; 405: exhaust hole; 406: first wire entry terminal; 407: second wire entry terminal; 408: first conversion terminal; 409: second conversion terminal; 410: first wire exit terminal; 411: second wire exit terminal; 501: first metal clamping bar; 502: first insulation baffle plate; 6: first screw rod; 7: first metal wire frame; 701: first cavity; 702: second cavity; 8: first metal busbar; 801: first terminal; 802: second terminal; 803: third terminal; 804: heat sink; 9: traction part; 101: first clip; 102: second clip; 11: limiting pin; 12: limiting slot; 13: first elastic part; 14: second elastic part; 15: plug hole; 16: third elastic part; 17: first lock elastic part; 18: second metal busbar; 181: first terminal; 182: second terminal; 183: third terminal; 191: second metal clamping bar; 192: second insulation baffle plate; 20: second screw rod; 21: second metal wire frame; 22: power distribution unit; 221: first clamping slot; 222: second clamping slot; 23: clamping plate; 24: first conversion metal sheet; 25: second conversion metal sheet; 26: first entry wire; 27: second entry wire; 28: arc chute; 29: arc strike plate; 291: flat section; 292: bent section; 30: arc absorption plate; and 301: filter hole.

### DESCRIPTION OF EMBODIMENTS

Embodiments of this application relate to a circuit breaker and a power distribution system. The following describes the circuit breaker and the power distribution system in detail with reference to accompanying drawings.

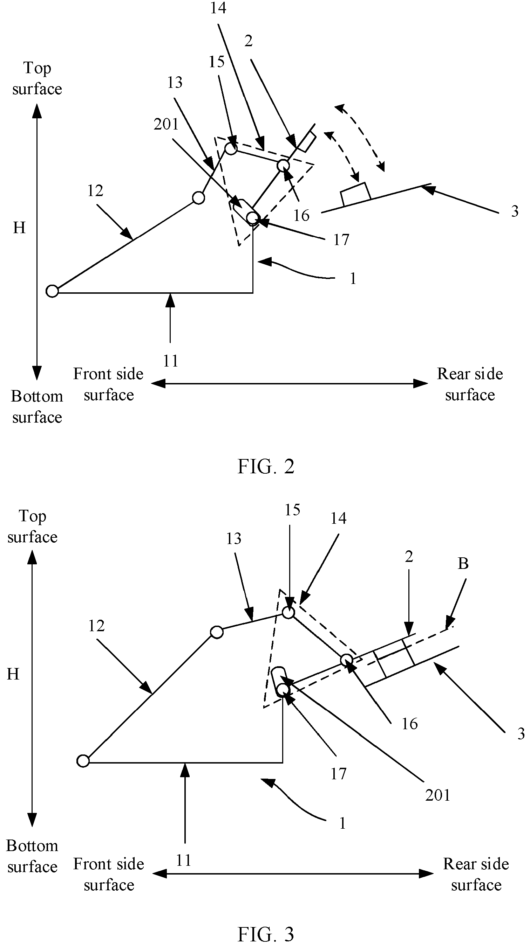

In an aspect, an embodiment of this application provides a circuit breaker. With reference to FIG. 2, FIG. 3, and FIG. 4, the circuit breaker includes a housing (not shown in FIG. 2, FIG. 3, or FIG. 4), and a link mechanism 1, a movable contact plate 2, and a fixed contact plate 3 that are disposed in the housing. The link mechanism 1 is connected to the movable contact plate 2 to control the movable contact plate 2 and the fixed contact plate 3 to switch between a switched-on state and a switched-off state.

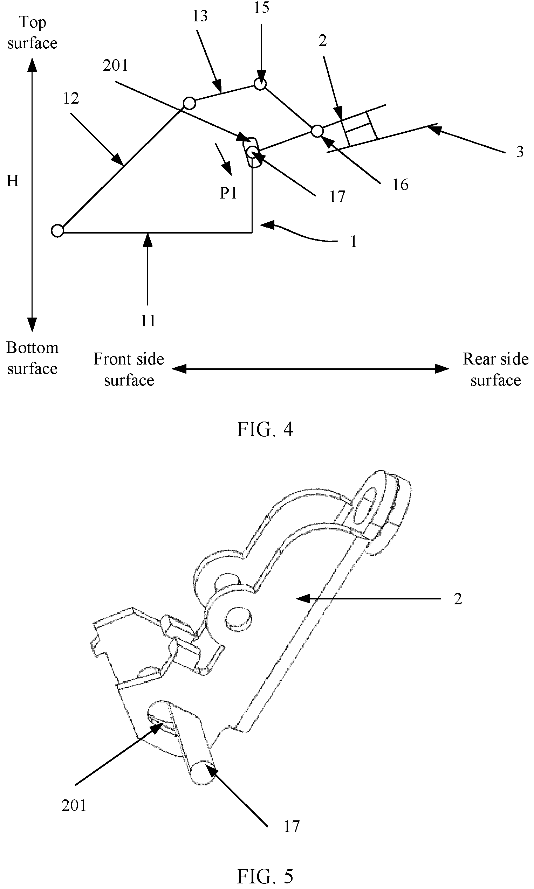

The link mechanism 1 includes a fixing plate 11, a crank arm 12, a jumper subboard assembly 13, and a diversion plate 14. The crank arm 12 is hinged to the fixing plate 11. The jumper subboard assembly 13 is hinged to the crank arm 12. The diversion plate 14 is separately hinged to the jumper subboard assembly 13, to the movable contact plate 2, and through a rotating shaft 17, to the fixing plate 11. A hinge joint between the diversion plate 14 and the jumper subboard assembly 13, a hinge joint between the diversion plate 14 and the movable contact plate 2, and a hinge joint between the diversion plate 14 and the fixing plate 11 are arranged in a triangular shape (as shown in FIG. 2). The movable contact plate 2 has a strip-shaped hole 201 (as shown in FIG. 5). A surface on which the movable contact plate 2 and the fixed contact plate 3 come into contact is a contact plane (a plane B shown in FIG. 3). An extension direction of the strip-shaped hole 201 is not parallel to the contact plane, namely, the plane B. The rotating shaft 17 passes through the strip-shaped hole 201, and the movable contact plate 2 can move relative to the rotating shaft 17 along the extension direction of the strip-shaped hole 201.

As shown in FIG. 2, the diversion plate 14 is hinged to the jumper subboard assembly 13 through a first hinge shaft 15, and the diversion plate 14 is hinged to the movable contact plate 2 through a second hinge shaft 16. The first hinge shaft 15 and the second hinge shaft 16 are arranged in parallel with the rotating shaft 17.

The following describes in detail a switch-on process and a switch-off process of the circuit breaker with reference to FIG. 2, FIG. 3, and FIG. 4.

FIG. 2 to FIG. 4 show a switch-on process in which the link mechanism 1 drives the movable contact plate 2 and the fixed contact plate 3. Specifically, in a switched-off state, the movable contact plate 2 is detached from the fixed contact plate 3, and the rotating shaft 17 presses against a first end of the strip-shaped hole 201. With reference to FIG. 2 and FIG. 3, when the crank arm 12 rotates along a first rotation direction (a counterclockwise direction), the jumper subboard assembly 13 rotates relative to the crank arm 12, the diversion plate 14 also rotates relative to the jumper subboard assembly 13 around the first hinge shaft 15, the diversion plate 14 rotates relative to the fixing plate 11 around the rotating shaft 17, and the movable contact plate 2 rotates relative to the diversion plate 14 around the second hinge shaft 16, until a movable contact 2 is in contact with a fixed contact 3. This stage is a clear distance stage. In this stage, the movable contact plate 2 and the fixed contact plate 3 are only in contact with each other, and there is no extrusion force between the movable contact plate 2 and the fixed contact plate 3. With reference to FIG. 3 and FIG. 4, as the crank arm 12 continues to rotate, the movable contact plate 2 moves relative to the rotating shaft 17 along a P1 direction in FIG. 4 under the action of the diversion plate 14; and as the movable contact plate 2 moves, an extrusion force between the movable contact plate 2 and the fixed contact plate 3 gradually increases, until the movable contact plate 2 is electrically connected to the fixed contact plate 3. This stage is a switched-on stage.

FIG. 4 to FIG. 2 show a switch-off process in which the link mechanism 1 drives the movable contact plate 2 and the fixed contact plate 3. Specifically, in a switched-on state, the movable contact plate 2 presses against the fixed contact plate 3. With reference to FIG. 4 and FIG. 3, when the crank arm 12 rotates along a second rotation direction (a clockwise direction), the jumper subboard assembly 13 is driven to rotate, the jumper subboard assembly 13 drives the diversion plate 14 to rotate around the first hinge shaft 15, and the movable contact plate 2 moves relative to the rotating shaft 17 in a direction opposite to the P1 direction in FIG. 4 under the action of the diversion plate 14. As the movable contact plate 2 moves, an extrusion force between the movable contact plate 2 and the fixed contact plate 3 gradually decreases. When the rotating shaft 17 presses against the first end of the strip-shaped hole 201, the extrusion force between the movable contact plate 2 and the fixed contact plate 3 decreases to zero. This stage is an overstroke stage. In this stage, the movable contact plate 2 and the fixed contact plate 3 are still in a contact state. With reference to FIG. 3 and FIG. 2, as the crank arm 12 continues to rotate, the jumper subboard assembly 13 rotates relative to the crank arm 12, the diversion plate 14 also rotates relative to the jumper subboard assembly 13 around the first hinge shaft 15, the diversion plate 14 rotates relative to the fixing plate 11 around the rotating shaft 17, and the movable contact plate 2 rotates relative to the diversion plate 14 around the second hinge shaft 16, until the movable contact plate 2 is detached from the fixed contact plate 3. This stage is a switched-off stage.

It should be noted that an overstroke is a distance in which the movable contact plate moves from a switch-on location to a switch-off location, and a clear distance is a distance in which the movable contact plate moves from the switch-off location to the switch-on location.

Compared with a conventional circuit breaker, in the circuit breaker provided in this application, the diversion plate is added in the link mechanism, the hinge joint between the diversion plate and the jumper subboard assembly, the hinge joint between the diversion plate and the movable contact plate, and the hinge joint between the diversion plate and the fixing plate are arranged in a triangular shape, and the strip-shaped hole not parallel to the contact plane is provided on the movable contact plate, to limit a rotation direction and a rotation angle of the movable contact plate.

With reference to FIG. 2, FIG. 3, FIG. 4, and FIG. 9, in some implementations, the housing 4 has a bottom surface 401 and a top surface 402 that are opposite to each other, and a front side surface 403 and a rear side surface 404 that are located between the bottom surface 401 and the top surface 402 and that are opposite to each other. The crank arm 12, the jumper subboard assembly 13, the diversion plate 14, and the movable contact plate 2 are arranged in a direction from the front side surface to the rear side surface. In this way, an electric arc discharged when the movable contact plate 2 is detached from the fixed contact plate 3 is toward a rear side of the circuit breaker (as shown in FIG. 2). Compared with discharging an electric arc toward the top of the circuit breaker, this correspondingly reduces a size of the circuit breaker in a height direction (H shown in FIG. 2).

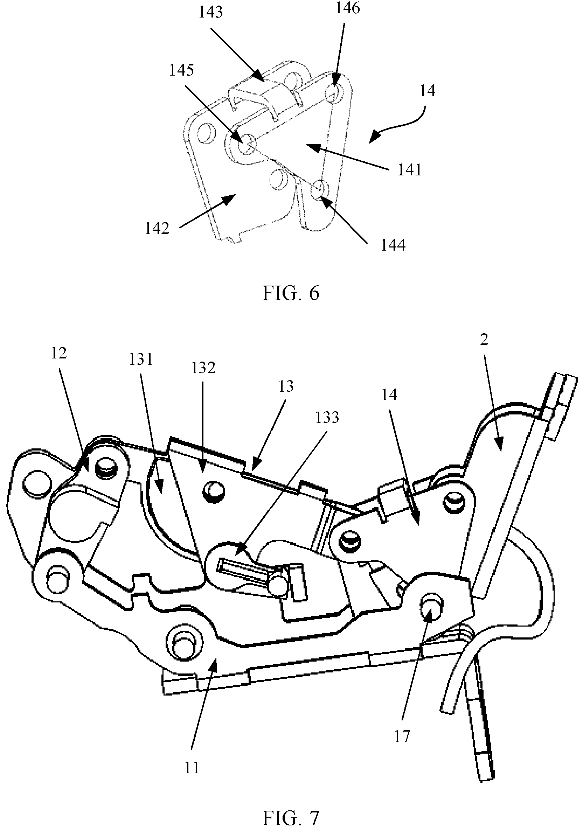

With reference to FIG. 7, the jumper subboard assembly 13 provided in this embodiment includes a jumper subboard 131, a jumper subboard support 132, and a lock axle shaft 133. The jumper subboard 131 is hinged to the jumper subboard support 132. The lock axle shaft 133 is hinged to the jumper subboard support 132.

In some implementations, the extension direction of the strip-shaped hole 201 is perpendicular to the contact plane. This design achieves the following technical effect: Stability of an overstroke and a clear distance of the movable contact plate can be ensured.

To be specific, when the extension direction of the strip-shaped hole 201 is perpendicular to the contact plane, the following phenomenon does not occur: During the first operating of the circuit breaker, an overstroke of the movable contact plate is M1, and an extrusion force between the movable contact plate and the fixed contact plate is X1. During the second operating, the overstroke of the movable contact plate changes to M2, and the extrusion force between the movable contact plate and the fixed contact plate changes to X2. M1 and M2 are unequal, and therefore X1 and X2 are unequal, causing inconsistency of a contact resistance between the movable contact plate and the fixed contact plate. As a result, a temperature rise at a contact point between the movable contact plate and the fixed contact plate is unstable, or even a serious accident such as fusion welding or a fire occurs, affecting performance of the circuit breaker.

In some implementations, with reference to FIG. 6, the diversion plate 14 includes a first plate 141 and a second plate 142 that are opposite to each other. The first plate 141 and the second plate 142 are connected by using a connecting plate 143. The first plate 141 and the second plate 142 each are provided with a first hinge hole 144, a second hinge hole 145, and a third hinge hole 146 that are arranged in a triangular shape. The rotating shaft passes through the first hinge hole 144 on the first plate 141 and the first hinge hole 144 on the second plate 142, and passes through the strip-shaped hole on the movable contact plate. The first hinge shaft is disposed in the second hinge hole 145, and is hinged to the jumper subboard assembly. The second hinge shaft is disposed in the third hinge hole 146, and is hinged to the movable contact plate. Certainly, the diversion plate 14 may alternatively have another structure. A diversion plate with any structure falls within the protection scope of this application.

To minimize a volume of the circuit breaker to properly utilize space in the circuit breaker, with reference to FIG. 7, a part, of the movable contact plate 2, that is hinged to the diversion plate 14 is located between the first plate 141 and the second plate 142 that are opposite to each other, and a part, of the jumper subboard assembly 13, that is hinged to the diversion plate 14 is located between the first plate 141 and the second plate 142 that are opposite to each other. To be specific, the movable contact plate and the jumper subboard assembly are disposed between the first plate and the second plate that are opposite to each other, to fully utilize space between the first plate and the second plate. The movable contact plate and the jumper subboard assembly are disposed between the first plate and the second plate. In comparison, first, this avoids occupying space of other structures; and second, an amount of change in the jumper subboard assembly with a high requirement on processing precision is small, thereby avoiding impact on operation stability of the circuit breaker due to a large change in a size of the jumper subboard assembly.

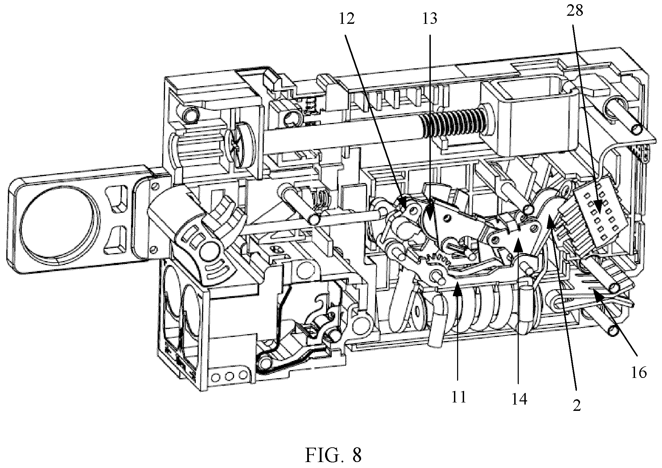

In a process in which the movable contact plate 2 is detached from the fixed contact plate 3 and a state in which a current passes is switched to a state in which no current passes, an electric arc is produced between the movable contact plate 2 and the fixed contact plate 3. To avoid danger caused by the electric arc, correspondingly, as shown in FIG. 8, an arc chute 28 is mounted at a location, in the housing 4, that corresponds to the movable contact plate 2, the arc chute 28 is close to the rear side surface 404, and an exhaust hole 405 is provided on the rear side surface 404 of the housing 4. In this way, gas produced by the electric arc can be discharged toward the rear side, and in the height direction of the circuit breaker, there is no need to reserve a flashover distance of approximately 35 mm, thereby reducing the size of the circuit breaker in the height direction.

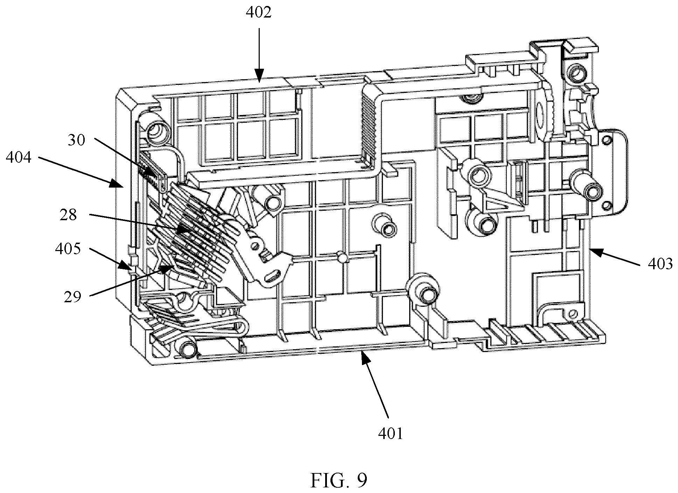

To prevent the electric arc from splashing to other locations in the housing 4, with reference to FIG. 9, the circuit breaker further includes an arc strike plate 29, and the arc strike plate 29 is disposed on a side, of the arc chute 28, that is close to the bottom surface 401. An electric arc splashing onto the arc strike plate 29 may be reflected by the arc strike plate 29 to the arc chute 28. In this way, with the arc strike plate 29, the electric arc can be prevented from splashing onto other structures in the housing, and the arc strike plate protects the other structures.

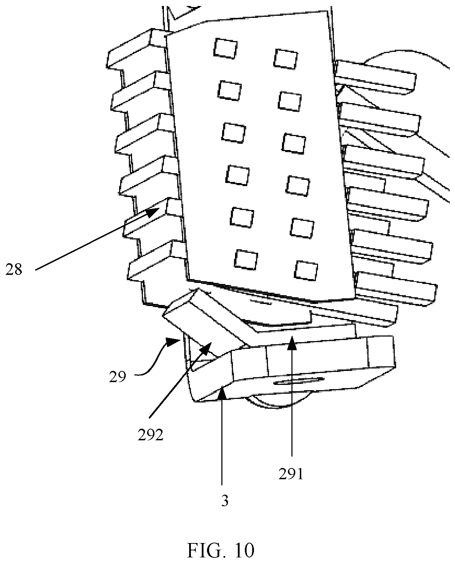

There are a plurality of cases for a structure of the arc strike plate 29. For example, with reference to FIG. 10, the arc strike plate 29 includes a flat section 291 and a bent section 292. The flat section 291 is mounted on the fixed contact plate 3, and the bent section 292 is bent in a direction toward the arc chute 28. For another example, the arc strike plate includes a flat section.

When the arc strike plate 29 includes the flat section 291 and the bent section 292, the flat section 291 is located below the arc chute 28, and can upwardly reflect an electric arc splashing onto the flat section 291. In addition, the bent section 292 is located on a side of the arc chute 28, and can reflect an electric arc to the arc chute 28 from the side. Therefore, with the flat section 291 and the bent section 292, an electric arc can be reflected to the arc chute from a plurality of angles, thereby further improving safety performance of the circuit breaker.

To prevent charged particles in an electric arc from affecting other structures in the housing or prevent charged particles in an electric arc from being discharged through the exhaust hole and affecting another device, the circuit breaker further includes an arc absorption plate 30. The arc absorption plate 30 is disposed on a side, of the arc chute 28, that is close to the top surface. The arc absorption plate 30 is made of a metal material, and a filter hole 301 is provided on the arc absorption plate 30. Charged particles in an electric arc are filtered through the filter hole 301.

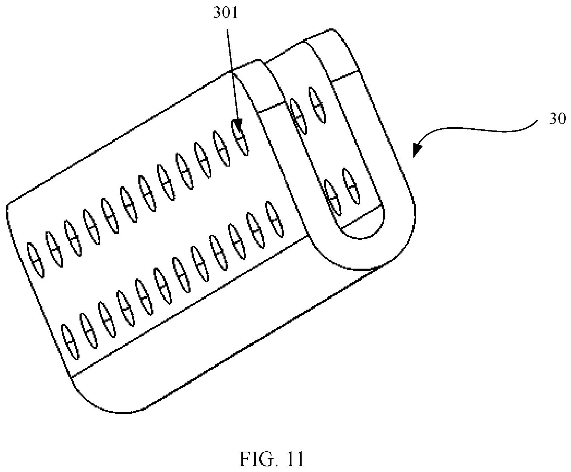

In some implementations, with reference to FIG. 11, the arc absorption plate 30 includes a first filter plate and a second filter plate that are folded toward each other, and mesh holes on the first filter plate and mesh holes on the second filter plate are staggered. To be specific, a mesh hole on the first filter plate faces a non-mesh-hole location on the second filter plate, and a non-mesh-hole location on the first filter plate faces a mesh hole on the second filter plate. Charged particles discharged out of the housing can be further reduced through double filtering by the first filter plate and the second filter plate.

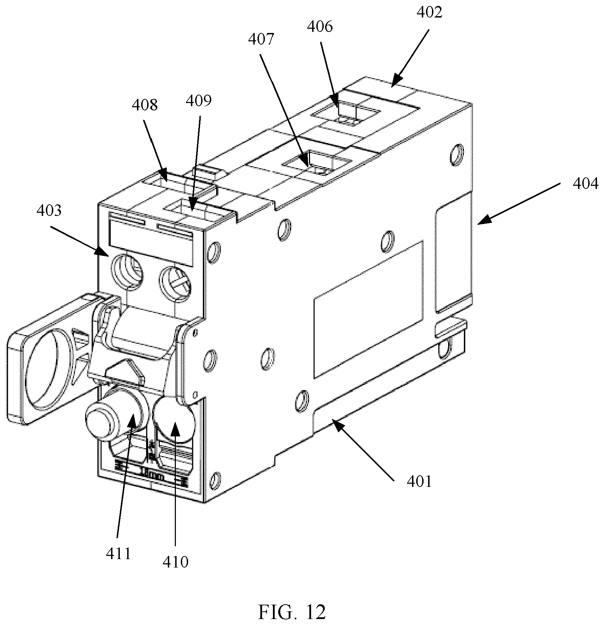

With reference to FIG. 12, a first wire entry terminal 406, a second wire entry terminal 407, a first wire exit terminal 410, a second wire exit terminal 411, a first conversion terminal 408, and a second conversion terminal 409 are provided on the housing 4, where the first conversion terminal 408 is electrically connected to a first conversion terminal 408 of another circuit breaker by using a first conversion metal sheet, and the second conversion terminal 409 is electrically connected to a second conversion terminal 409 of the another circuit breaker by using a second conversion metal sheet.

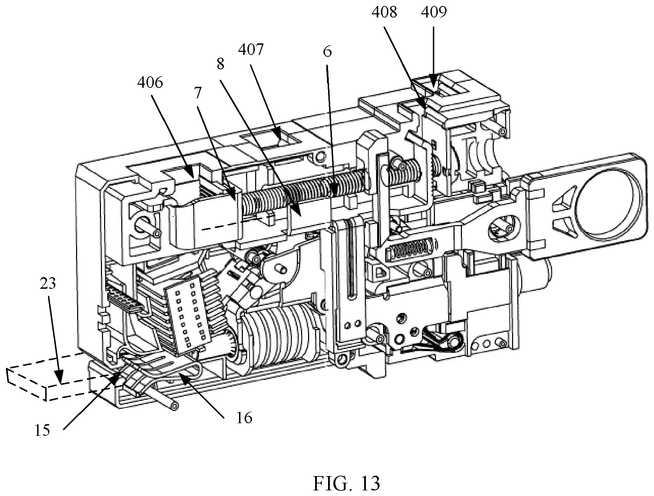

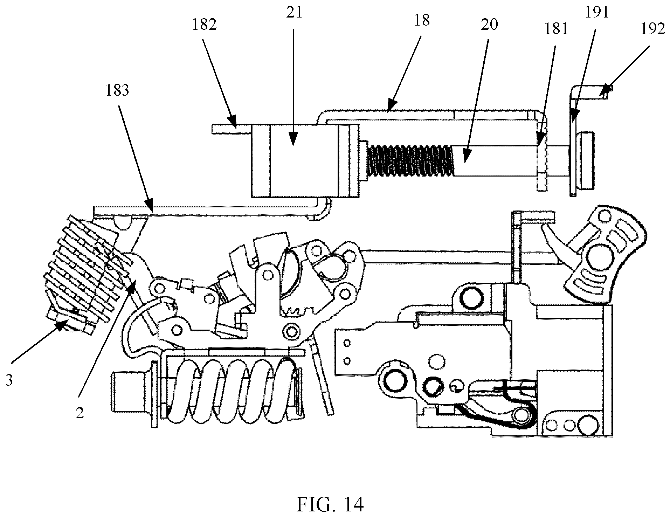

A first metal busbar 8 (shown in FIG. 13) and a second metal busbar 18 (shown in FIG. 14) are disposed in the housing 4. The first metal busbar 8 is electrically connected to the first wire entry terminal 406, the first conversion terminal 408, and a local output terminal located in the housing. The second metal busbar 18 is electrically connected to the second wire entry terminal 407, the second conversion terminal 409, and the fixed contact 3. In this way, a 1P+N (an N pole is directly connected) circuit breaker is formed.

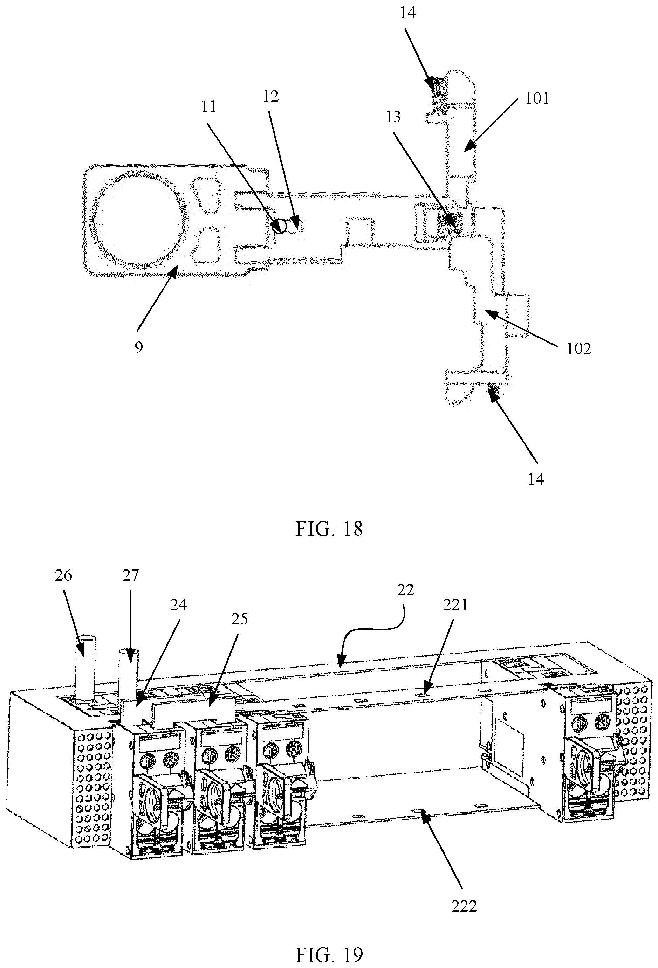

The first conversion terminal 408 and the second conversion terminal 409 are provided on the housing 4. Therefore, with reference to FIG. 19, during specific use, the first conversion terminal 408 may be electrically connected to a first conversion terminal 408 of another circuit breaker by using a first conversion metal sheet 24, and the second conversion terminal 409 may be electrically connected to a second conversion terminal 409 of the another circuit breaker by using a second conversion metal sheet 25. This achieves current distribution. That is, a current can be distributed from one circuit breaker to another circuit breaker by using the first conversion metal plate and the second conversion metal plate.

For example, a first circuit breaker and a second circuit breaker are connected by using a first conversion metal sheet and a second conversion metal sheet, a power distribution unit is connected to the first circuit breaker through a first entry wire and a second entry wire, the first circuit breaker is connected to a first load, and the second circuit breaker is connected to a second load. When a movable contact plate and a fixed contact plate of the first circuit breaker are in a switched-on state and a movable contact plate and a fixed contact plate of the second circuit breaker are in a switched-on state, the power distribution unit supplies power to the first circuit breaker through the first entry wire and the second entry wire, to supply power to the corresponding first load; and distributes a current to the second circuit breaker by using the first conversion metal sheet and the second conversion metal sheet, to supply power to the second load.

There are a plurality of cases in which the first wire entry terminal 406, the second wire entry terminal 407, the first wire exit terminal 410, the second wire exit terminal 411, the first conversion terminal 408, and the second conversion terminal 409 are provided on the housing 4.

During use, with reference to FIG. 19, the circuit breaker is inserted into a power distribution unit 22, and the power distribution unit 22 supplies power to the circuit breaker. In addition, the power distribution unit 22 is usually mounted at a location close to the top of a network cabinet, and mounting space is small.

To minimize mounting space occupied, with reference to FIG. 12, the first wire entry terminal 406, the second wire entry terminal 407, the first conversion terminal 408, and the second conversion terminal 409 are all provided on the top surface 402, and the first wire exit terminal 410 and the second wire exit terminal 411 are located on the front side surface 403. The first wire entry terminal 406 and the second wire entry terminal 407 are located at a first end of the top surface, and the first conversion terminal 408 and the second conversion terminal 409 are located at a second end of the top surface. The first end is opposite to the second end. This design achieves the following technical effect: After the circuit breaker with the structure provided in this embodiment of this application is mounted in a power distribution unit, the top surface faces a direction toward the top of a network cabinet, and the first entry wire and the second entry wire may be directly electrically connected to a wire exit terminal, located above the top surface, of the power distribution unit. A wire entry mode formed in this way may be referred to as upper wire entry, and the first entry wire and the second entry wire do not need to be bent. Compared with a connection mode in which the first entry wire and the second entry wire are bent, this reduces space occupied by the first entry wire and the second entry wire. In addition, the first wire exit terminal 410 and the second wire exit terminal 411 are located on the front side surface, that is, in a direction toward a load. In this way, the load and the circuit breaker are electrically connected directly through a connecting wire. A wire exit mode formed in this way may be referred to as front wire exit. The circuit breaker or the power distribution unit does not occupy large space along a height direction of a cabinet body.

Certainly, during specific implementation, the power distribution unit 22 may be alternatively mounted at a location close to the bottom of the network cabinet. In this case, the top surface faces a direction toward the bottom of the network cabinet.

In addition, with reference to FIG. 12, the first conversion terminal 408 and the second conversion terminal 409 are also provided on the top surface. During use, with reference to FIG. 19, a plurality of circuit breakers are arranged side by side, a first conversion terminal 408 of one circuit breaker may be electrically connected to a first conversion terminal 408 of another circuit breaker directly by using a first conversion metal sheet 24, and a second conversion terminal 409 of the circuit breaker may be electrically connected to a second conversion terminal 409 of the another circuit breaker by using a second conversion metal sheet 25. The first conversion metal sheet and the second conversion metal sheet may be designed into a flat plate structure, and therefore have a simple structure, do not need to be bent, and occupy small space.

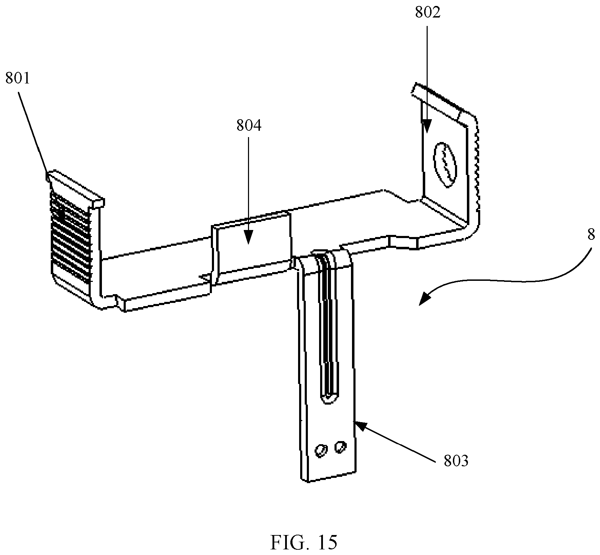

In some implementations, with reference to FIG. 15, the first metal busbar 8 has a first terminal 801, a second terminal 802, and a third terminal 803 that are connected to each other. The first terminal 801 is located in the first conversion terminal 408, to be electrically connected to the first conversion metal sheet inserted into the first conversion terminal 408. The second terminal 802 is located in the first wire entry terminal 406, to be electrically connected to the first entry wire inserted into the first wire entry terminal 406. The third terminal 803 is electrically connected to the local output terminal disposed in the housing 4.

A structure of the first metal busbar 8 may be implemented in a plurality of cases. For example, with reference to FIG. 15, the first metal busbar 8 includes a horizontal plate and a vertical plate, the vertical plate is connected to the middle of the horizontal plate, a first extension portion and a second extension portion are provided at two ends of the horizontal plate, both the first extension portion and the second extension portion extend in a direction away from the vertical plate, the first extension portion forms a first terminal and extends into the first conversion terminal, the second extension portion forms a second terminal and extends into the first wire entry terminal, and a third terminal is formed at an end, of the vertical plate, that is away from the horizontal plate and is electrically connected to the local output terminal. Certainly, the first metal busbar 8 may be alternatively designed into another structure. A first metal busbar 8 with any structure falls within the protection scope of this application.

It should be noted that, that the vertical plate is connected to the middle of the horizontal plate does not only mean that the vertical plate is connected to a geometric center of the horizontal plate; instead, provided that the vertical plate is at any location between two ends of the horizontal plate, it is considered that the vertical plate is connected to the middle of the horizontal plate.

To enable good electrical contact between the second extension portion located in the first wire entry terminal and the first entry wire and good electrical contact between the first extension portion located in the first conversion terminal and the first conversion metal sheet, with reference to FIG. 15, both the first extension portion and the second extension portion have an embossing structure. After the embossing structure is used, many contact points are formed on a bonding surface, thereby improving reliability of contact and reducing contact resistance on the bonding surface.

During specific implementation, the horizontal plate and the vertical plate may be connected by using a welding structure, and the horizontal plate and the vertical plate may be integrally molded to obtain the first metal busbar. In this application, an integrally molded first metal busbar is preferentially used, because the integrally molded first metal busbar has fewer connection points and smaller impedance than a first metal busbar manufactured by using a welding structure.

When the first metal busbar 8 with the structure shown in FIG. 15 is used, to improve a heat dissipation effect of the first metal busbar 8, with reference to FIG. 15, the first metal busbar 8 further includes a heat sink 804. With the design of the heat sink 804, a heat dissipation area of the first metal busbar 8 is increased, to improve a heat dissipation effect of the first metal busbar.

In some implementations, with reference to FIG. 14, the second metal busbar 18 has a first terminal 181, a second terminal 182, and a third terminal 183 that are connected to each other. The first terminal 181 is located in the second conversion terminal, to be electrically connected to the second conversion metal sheet inserted into the second conversion terminal. The second terminal 182 is located in the second wire entry terminal, to be electrically connected to the second entry wire inserted into the second wire entry terminal. The third terminal 183 is electrically connected to the fixed contact 3.

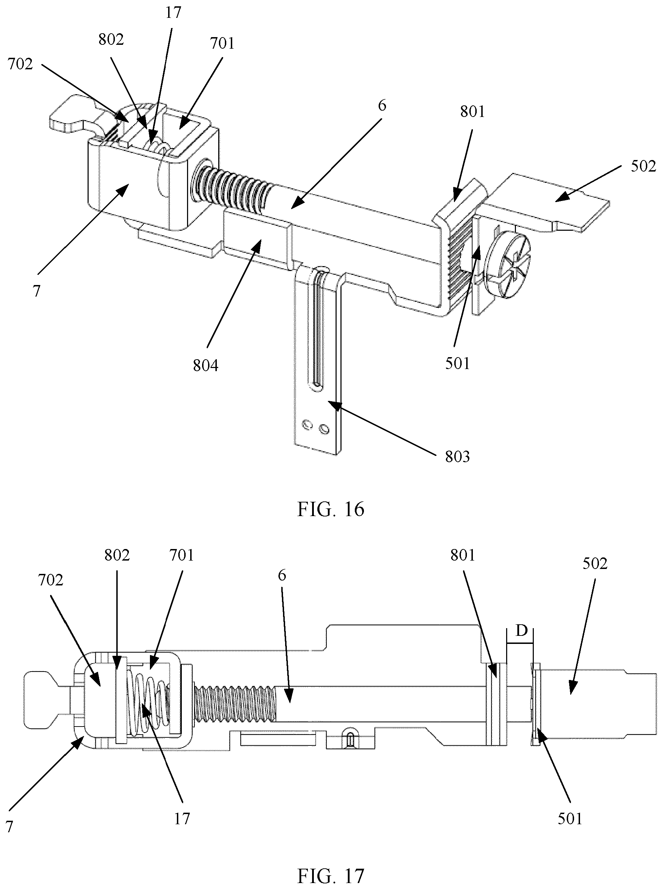

After the first conversion metal sheet 24 is inserted into the first conversion terminal 408, the first conversion metal sheet needs to be fastened. This embodiment of this application provides a first fastener for fastening the first conversion metal sheet. With reference to FIG. 16 and FIG. 17, the first fastener includes a first screw rod 6 and a first metal clamping bar 501. A first end of two opposite ends of the first screw rod 6 is located outside the housing, a second end extends into the housing through a through hole (the through hole is shown in FIG. 15) on the first terminal 801 of the first metal busbar 8. The first metal clamping bar 501 is disposed at a location close to the first end of the first screw rod 6, the first metal clamping bar 501 is fixed relative to the first screw rod 6, and the first metal clamping bar 501 is located between the first terminal 801 of the first metal busbar and the first end of the first screw rod 6.

After the first conversion metal sheet is inserted into the first conversion terminal, the first screw rod drives, through rotation of the first screw rod, the first metal clamping bar to move relative to the first metal busbar in a direction toward the first terminal of the first metal busbar, to clamp the first conversion metal sheet between the first terminal of the first metal busbar and the first metal clamping bar.

In addition, after the first entry wire is inserted into the first wire entry terminal, the first entry wire also needs to be fastened. This embodiment of this application further provides a structure for fastening the first entry wire. With reference to FIG. 16 and FIG. 17, the circuit breaker further includes a first metal wire frame 7. The first metal wire frame 7 is disposed at a location close to the second end of the first screw rod 6, a cavity is formed in the first metal wire frame 7, and the second terminal 802 of the first metal busbar extends into the cavity, so that the cavity forms a first cavity 701 and a second cavity 702. The second end of the first screw rod 6 extends into the first cavity 701 through the first metal wire frame, and the first metal wire frame 7 and the first screw rod 6 are in threaded fit. The second cavity 702 can allow insertion of the first entry wire.

To be specific, when the first screw rod rotates, the second end of the first screw rod 6 presses against the second terminal 802 of the first metal busbar to prevent the first screw rod 6 from moving. In addition, because the first screw rod and the first metal wire frame are in threaded fit, when the first screw rod continues to rotate, the first metal wire frame is driven to move in a direction away from the first metal clamping bar, to clamp the first entry wire in the second cavity.

Therefore, the structure for fastening the first conversion metal sheet and the first entry wire in this embodiment of this application implements fastening of the first conversion metal sheet and the first entry wire through rotation of the same first screw rod. Therefore, the structure is simple, and implementation is convenient.

To improve safety performance of the circuit breaker and prevent foreign matter from being inserted into the first conversion terminal and causing a safety hazard, with reference to FIG. 16 and FIG. 17, the circuit breaker further includes a first insulation baffle plate 502. The first insulation baffle plate 502 is connected to the first metal clamping bar 501. When the first screw rod 6 moves along its extension direction, the first metal clamping bar 501 and the first insulation baffle plate 502 can be driven to move synchronously, so that the first insulation baffle plate 502 moves and covers an opening of the first conversion terminal.

If the first conversion metal sheet needs to be inserted, the first screw rod may rotate to drive the first metal clamping bar to move, so that the first insulation baffle plate 502 moves away from the opening of the first conversion terminal, and the first conversion terminal is in an open state.

Because the first screw rod and the through hole on the first terminal of the first metal busbar are in clearance fit, the first screw rod, the first metal wire frame, and the first metal clamping bar have a degree of freedom along the extension direction of the screw rod. In this way, when the first conversion metal sheet is inserted, the first metal clamping bar may block the first conversion terminal, and the first conversion metal sheet cannot be smoothly inserted into the first conversion terminal.

To prevent the first metal clamping bar from blocking the first conversion terminal, with reference to FIG. 16 and FIG. 17, the circuit breaker further includes a first lock elastic part 17. The first lock elastic part 17 is disposed close to the first metal wire frame 7. The first lock elastic part 17 can apply an elastic force toward the first end of the first screw rod to the first metal wire frame 7, so that there is a spacing D between the first metal clamping bar and the first extension portion for inserting the first conversion metal sheet. The first lock elastic part 17 is disposed, so that the first screw rod, the first metal wire frame, and the first metal clamping bar can be prevented from moving along the extension direction of the screw rod. Therefore, there is a fixed spacing D between the first metal clamping bar and the first extension portion, thereby effectively ensuring smooth insertion of the first conversion metal sheet.

A mounting location of the first lock elastic part 17 may be implemented in a plurality of manners. For example, with reference to FIG. 16 and FIG. 17, the first lock elastic part 17 is disposed in the first cavity 701, an end of the first lock elastic part 17 is connected to the second terminal 802 of the first metal busbar, and the other end is connected to the first metal wire frame 7. For another example, the first lock elastic part 17 is disposed outside the first metal wire frame 7, an end of the first lock elastic part 17 is fixed relative to the housing, and the other end is connected to the first metal wire frame 7. Certainly, the first lock elastic part 17 alternatively has another mounting manner. A mounting manner of the first lock elastic part 17 is not limited herein.

After the second conversion metal sheet 25 is inserted into the second conversion terminal 409, the second conversion metal sheet needs to be fastened. This embodiment of this application provides a second fastener for fastening the second conversion metal sheet. Structures of the first fastener and the second fastener may be the same or different. For ease of operation, in this application, preferably, the structures of the second fastener and the first fastener are the same. The following describes in detail a structure of the second fastener.

With reference to FIG. 14, the second fastener includes a second screw rod 20 and a second metal clamping bar 191. A first end of two opposite ends of the second screw rod 20 is located outside the housing, a second end extends into the housing through a through hole on the first terminal 181 of the second metal busbar 18. The second metal clamping bar 191 is disposed at a location close to the first terminal of the second screw rod 20, the second metal clamping bar 191 is fixed relative to the second screw rod 20, and the second metal clamping bar 191 is located between the first terminal 181 of the second metal busbar and the first terminal of the second screw rod 20.

After the second conversion metal sheet is inserted into the second conversion terminal, the second screw rod drives, through rotation of the second screw rod, the second metal clamping bar to move relative to the second metal busbar in a direction toward the first terminal of the second metal busbar, to clamp the second conversion metal sheet between the first terminal of the second metal busbar and the second metal clamping bar.

With reference to FIG. 14, the circuit breaker further includes a second metal wire frame 21. The second metal wire frame 21 is disposed at a location close to the second terminal of the second screw rod 20, a cavity is formed in the second metal wire frame 21, and the second terminal of the second metal busbar extends into the cavity, so that the cavity forms a first cavity and a second cavity. The second terminal of the second screw rod 20 extends into the first cavity through the second metal wire frame, and the second metal wire frame 21 and the second screw rod 20 are in threaded fit. The second cavity can allow insertion of the second entry wire.

To be specific, when the second screw rod rotates, the second terminal of the second screw rod 20 presses against the second terminal of the second metal busbar to prevent the second screw rod 20 from moving. In addition, because the second screw rod and the second metal wire frame are in threaded fit, when the second screw rod continues to rotate, the second metal wire frame is driven to move in a direction away from the second metal clamping bar, to clamp the second entry wire in the second cavity.

To improve safety performance of the circuit breaker and prevent foreign matter from being inserted into the second conversion terminal and causing a safety hazard, with reference to FIG. 14, the circuit breaker further includes a second insulation baffle plate 192. The second insulation baffle plate 192 is connected to the second metal clamping bar 191. When the second screw rod 20 moves along its extension direction, the second metal clamping bar 191 and the second insulation baffle plate 192 can be driven to move synchronously, so that the second insulation baffle plate 192 moves and covers an opening of the second conversion terminal.

If the second conversion metal sheet needs to be inserted, the second screw rod may rotate to drive the second metal clamping bar to move, so that the second insulation baffle plate 192 moves away from the opening of the second conversion terminal, and the second conversion terminal is in an open state.

Because the second screw rod and the through hole on the first terminal of the second metal busbar are in clearance fit, the second screw rod, the second metal wire frame, and the second metal clamping bar have a degree of freedom along the extension direction of the screw rod. In this way, when the second conversion metal sheet is inserted, the second metal clamping bar may block the second conversion terminal, and the second conversion metal sheet cannot be smoothly inserted into the second conversion terminal.

To prevent the second metal clamping bar from blocking the second conversion terminal, the circuit breaker further includes a second lock elastic part. The second lock elastic part is disposed close to the second metal wire frame 21. The second lock elastic part can apply an elastic force toward the first terminal of the second screw rod to the second metal wire frame 21, so that there is a spacing between the second metal clamping bar and the first extension portion for inserting the second conversion metal sheet. The second lock elastic part is disposed, so that the second screw rod, the second metal wire frame, and the second metal clamping bar can be prevented from moving along the extension direction of the second screw rod. Therefore, there is a fixed spacing between the second metal clamping bar and the first extension portion, thereby effectively ensuring smooth insertion of the second conversion metal sheet.

A mounting location of the second lock elastic part may be implemented in a plurality of manners. For example, the second lock elastic part is disposed in the first cavity of the second wire frame, an end of the second lock elastic part is connected to the second terminal of the second metal busbar, and the other end is connected to the second metal wire frame. For another example, the second lock elastic part is disposed outside the second metal wire frame, an end of the second lock elastic part is fixed relative to the housing, and the other end is connected to the second metal wire frame.

An embodiment of this application further provides a structure for snap-fit between the circuit breaker and the power distribution unit. The following describes the snap-fit structure in detail.

With reference to FIG. 18, the snap-fit structure includes a clip (101 or 102), a traction part 9, a first elastic part 13, and a second elastic part 14. The clip can move relative to the housing along a first direction (the first direction is a direction from the front side surface to the rear side surface) between a protruded location and a retracted location. When the clip is at the protruded location, the clip is located outside the housing and is configured to snap into the power distribution unit. When the clip is at the retracted location, the clip is located inside the housing, to be detached from the power distribution unit. The traction part 9 can move relative to the housing along a second direction, where the second direction is perpendicular to the first direction. The traction part 9 has a first end and a second end that are opposite to each other. The first end is located inside the housing, and the second end is located outside the housing. When the clip is at the protruded location, the first end presses against the clip. When the clip is at the retracted location, the first end is detached from the clip. The first elastic part 13 can apply an elastic force to the traction part 9, so that the first end presses against the clip and applies a pushing force toward the outside of the housing to the clip. The second elastic part 14 can apply an elastic force to the clip. When the traction part 9 is pulled and the first end is detached from the clip, the second elastic part 14 can make the clip restore from the retracted location to the protruded location.

A working principle of the snap-fit structure is as follows: In an initial state, the first elastic part 13 can apply an elastic force toward the inside of the housing to the traction part 9, so that the first end of the traction part 9 presses against the clip and applies a pushing force toward the outside of the housing to the clip, an end of the clip is located at an end of the housing, and snap-fit with the power distribution unit can be implemented. When the circuit breaker in snap-fit with the power distribution unit needs to move out, the traction part 9 is pulled in a direction toward the outside of the housing to break the elastic force applied by the first elastic part 13 to the traction part 9. In this case, the end of the traction part 9 is detached from the clip, the pushing force against the clip disappears, the clip moves into the housing, and the circuit breaker moves out of the power distribution unit. Under the action of the second elastic part, the clip can restore from the retracted location to the protruded location, to perform next snapping.

When the circuit breaker is connected to the power distribution unit through the snap-fit structure, mounting is convenient, and the circuit breaker can be replaced on site through plugging, thereby implementing plugging of the circuit breaker without removing other mechanical parts.

To improve strength of connection between the circuit breaker and the power distribution unit, with reference to FIG. 18, the clip includes a first clip 101 and a second clip 102. The first clip 101 and the second clip 102 are arranged opposite to each other on two sides of the traction part 9. An end, located in the housing, of the first clip 101 is connected to an end, located in the housing, of the second clip 102 through the second elastic part. Alternatively, the first clip 101 is connected to the housing through the second elastic part 14, and the second clip 102 is connected to the housing through the second elastic part 14.

Snap-fit with the power distribution unit is implemented by using the first clip and the second clip that are arranged opposite to each other. Compared with connection by using one clip, this correspondingly improves strength of connection between the circuit breaker and the power distribution unit. Structures of the first clip 101 and the second clip 102 are not limited in this application.

To further improve strength of connection between the circuit breaker and the power distribution unit, with reference to FIG. 13, a plug hole 15 is provided on the housing 4. The plug hole 15 is used for plugging a clamping plate 23 of the power distribution unit. A third elastic part 16 is disposed in the plug hole 15, and elastic deformation of the third elastic part 16 can enable the clamping plate 23 to be clamped in the plug hole 15. The plug hole 15 may be provided on a side surface, of the housing, that is opposite to the traction part. The plug hole 15 is provided on the housing, and the third elastic part 16 is disposed in the plug hole 15, so that plugging between the circuit breaker and the power distribution unit is implemented, and the strength of connection between the circuit breaker and the power distribution unit can be further improved.

The third elastic part 16 includes elastomers that are opposite to each other. After the clamping plate is inserted into the plug hole, the elastomers press against the clamping plate to fasten the clamping plate in the plug hole. Certainly, the third elastic part 16 may be alternatively an elastic mechanical part with another structure.

To make the first clip 101 and the second clip 102 move relative to the housing in the first direction, a first guide rail for the first clip 101 to slide and a second guide rail for the second clip 102 to slide are disposed in the housing, and extension directions of the first guide rail and the second guide rail are parallel to the first direction.

To make the first clip 101 and the second clip 102 smoothly snap into the power distribution unit, inclined surfaces are formed at ends, of the first clip 101 and the second clip 102, that are in fit with the power distribution unit. With the inclined surfaces, the first clip and the second clip can smoothly snap into clamping slots of the power distribution unit.

With reference to FIG. 18, a first inclined abutting surface provided in an inclined manner is formed at an end, of the traction part 9, that is close to the first clip 101, and a second inclined abutting surface in fit with the first inclined abutting surface is also formed at an end, of the first clip 101, that is close to the traction part 9. Likewise, a third inclined abutting surface provided in an inclined manner is formed at an end, of the traction part 9, that is close to the second clip 102, and a fourth inclined abutting surface in fit with the third inclined abutting surface is also formed at an end, of the second clip 102, that is close to the traction part 9. The first inclined abutting surface, the second inclined abutting surface, the third inclined abutting surface, and the fourth inclined abutting surface may be inclined surfaces at 45°.

When the traction part 9 is pulled, to prevent the first end of the traction part 9 from being pulled out of the housing, the circuit breaker further includes a limiting structure for performing limitation to prevent the first end of the traction part from sliding out of the housing.

The limiting structure may be implemented ina plurality of structures. Two embodiments are used below for explanation and description.

### Embodiment 1

With reference to FIG. 18, the limiting structure includes a limiting slot 12 and a limiting pin 11. The limiting slot 12 is provided on the traction part 9. An end of the limiting pin 11 is fixed relative to the housing, and the other end is located in the limiting slot 12. An extension direction of the limiting slot 12 is parallel to the second direction.

### Embodiment 2

The limiting structure includes a limiting slot and a limiting pin. The limiting slot is provided on the housing. An end of the limiting pin is fixed relative to the traction part, and the other end is located in the limiting slot. An extension direction of the limiting slot is parallel to the second direction.

In another aspect, an embodiment of this application further provides a power distribution system. With reference to FIG. 19, the power distribution system includes a power distribution unit 22 and a plurality of circuit breakers. The plurality of circuit breakers are disposed in the power distribution unit 22, and the plurality of circuit breakers are arranged side by side. The circuit breakers each are the circuit breaker provided in the embodiment of the first aspect.

In the power distribution system, a link mechanism in the circuit breaker not only includes a fixing plate, a crank arm, and a jumper subboard assembly, but also includes a diversion plate, and a hinge joint between the diversion plate and the jumper subboard assembly, a hinge joint between the diversion plate and a movable contact plate, and a hinge joint between the diversion plate and the fixing plate are arranged in a triangular shape. In addition, the movable contact plate has a strip-shaped hole, and an extension direction of the strip-shaped hole is not parallel to a contact plane. That is, with the diversion plate and the strip-shaped hole that is not parallel to the contact plane and that is provided on the movable contact plate, a rotation angle and a rotation direction of the movable contact plate are limited.

The crank arm, the jumper subboard assembly, the diversion plate, and the movable contact plate are arranged in a direction from a front side surface to a rear side surface. The rear side surface of a housing faces a rear wall of the power distribution unit. In this way, an electric arc discharged when the movable contact plate is detached from a fixed contact plate is toward a rear side of the circuit breaker, that is, toward the rear wall of the power distribution unit. Compared with discharging an electric arc **toward** a top surface of a circuit breaker in a conventional technology, this correspondingly reduces a size of the circuit breaker in a height direction, and also correspondingly reduces a height size of the power distribution system.

In some implementations, when a first wire entry terminal, a second wire entry terminal, a first wire exit terminal, a second wire exit terminal, a first conversion terminal, and a second conversion terminal are provided on the housing, the power distribution unit 22 is electrically connected to the first wire entry terminal through a first entry wire 26, and is electrically connected to the second wire entry terminal through a second entry wire 27. First conversion terminals of two adjacent circuit breakers are **electrically** connected through a first conversion metal sheet 24, and second conversion terminals of the two adjacent circuit breakers are electrically connected through a second conversion metal sheet 25, to achieve current distribution without a connector, thereby simplifying a structure of the entire power distribution system, and reducing occupied space.

In some implementations, when the circuit breaker snaps into the power distribution unit by using a snap-fit structure, that is, when the circuit breaker is connected to the power distribution unit by using a first clip and a second clip, with reference to FIG. 19, a first clamping slot 221 is provided at a location, in the power distribution unit 22, that corresponds to the first clip, and a second clamping slot 222 is provided at a location, in the power distribution unit 22, that corresponds to the second clip. During specific implementation, the first clip snaps into the first clamping slot, and the second clip snaps into the second clamping slot, to implement snap-fit between the circuit breaker and the power distribution unit. Mounting of the circuit breaker is convenient, and the circuit breaker can be replaced on site through plugging, thereby implementing plugging of the circuit breaker without removing other mechanical parts.

In the descriptions of this specification, the specific features, structures, materials, or characteristics may be combined in an appropriate manner in any one or more of embodiments or examples.

The foregoing descriptions are merely specific implementations of this application, but are not intended to limit the protection scope of this application.

## Claims

1. A circuit breaker, comprising a housing (4), and a link mechanism (01, 1), a movable contact plate (02, 2), and a fixed contact plate (03, 3) that are disposed in the housing (4), wherein the link mechanism (01, 1) is connected to the movable contact plate (02, 2) to control the movable contact plate (02, 2) and the fixed contact plate (03, 3) to switch between a switch-on state and a switch-off state, and the link mechanism (01, 1) comprises:
a fixing plate (11);
a crank arm (12), hinged to the fixing plate (11);
a jumper subboard assembly (13), hinged to the crank arm (12); and
a diversion plate (14), separately hinged to the jumper subboard assembly (13), to the movable contact plate (02, 2), and through a rotating plate, to the fixing plate (11); and a hinge joint between the diversion plate (14) and the jumper subboard assembly (13), a hinge joint between the diversion plate (14) and the movable contact plate (02, 2), and a hinge joint between the diversion plate (14) and the fixing plate (11) are arranged in a triangular shape; and
the movable contact plate (02, 2) has a strip-shaped hole (201), a surface on which the movable contact plate (02, 2) and the fixed contact plate (03, 3) come into contact is a contact plane, an extension direction of the strip-shaped hole (201) is not parallel to the contact plane, a rotation shaft (17) passes through the strip-shaped hole (201), and the movable contact plate (02, 2) can move relative to the rotating shaft along the extension direction of the strip-shaped hole (201);
the diversion plate (14) comprises:
a first plate (141) and a second plate (142) that are opposite to each other, and the first plate (141) and the second plate (142) are connected by using a connection plate (143); and
the first plate (141) and the second plate (142) are provided with a first hinge hole (144), a second hinge hole (145), and a third hinge hole (146) that are arranged in a triangular shape, the rotating shaft (17) passes through the first hinge hole (144) on the first plate (141) and the first hinge hole (144) on the second plate (142), and passes through the strip-shaped hole (201); a first hinge shaft (15) is disposed in the second hinge hole (145), and is hinged to the jumper subboard assembly (13); and a second hinge shaft (16) is disposed in the third hinge hole (146), and is hinged to the movable contact plate (02, 2);
**characterized in that**
a part, of the movable contact plate (02, 2), that is hinged to the diversion plate (14) is located between the first plate (141) and the second plate (142) that are opposite to each other, and a part, of the jumper subboard assembly (13), that is hinged to the diversion plate (14) is located between the first plate (141) and the second plate (142) that are opposite to each other.

2. The circuit breaker according to claim 1, wherein the extension direction of the strip-shaped hole (201) is perpendicular to the contact plane.

3. The circuit breaker according to any one of claims 1 to 2, wherein the housing (4) has a bottom surface (401) and a top surface (402) that are opposite to each other, and a front side surface (403) and a rear side surface (404) that are located between the bottom surface (401) and the top surface (402) and that are opposite to each other, the crank arm (12), the jumper subboard assembly (13), the diversion plate (14), and the movable contact plate (02, 2) are arranged in a direction from the front side surface (403) to the rear side surface (404), an electric arc produced when the movable contact plate (02, 2) is detached from the fixed contact plate (03, 3) can be discharged to the rear side surface (404), an exhaust hole (405) is provided on the rear side surface (404), and the exhaust hole (405) is configured to discharge gas produced by the electric arc when the movable contact plate (02, 2) is detached from the fixed contact plate (03, 3).

4. The circuit breaker according to claim 3, further comprising:
an arc chute (28), disposed at a location, in the housing (4), that corresponds to the movable contact plate (02, 2), and is close to the rear side surface (404) of the housing (4); and
an arc strike plate (29), disposed on a side, of the arc chute (28), that is close to the bottom surface (401), wherein the arc strike plate (29) comprises a flat section (291) and a bent section (292), the flat section (291) is mounted on the fixed contact plate (03, 3), and the bent section (292) is bent in a direction toward the arc chute (28).

5. The circuit breaker according to claim 4, further comprising:
an arc absorption plate (30), disposed on a side, of the arc chute (28), that is close to the top surface (402), wherein the arc absorption plate (30) is made of a metal material, and a filter hole (301) is provided on the arc absorption plate (30).

6. The circuit breaker according to any one of claims 1 to 5, further comprising:
a clip (101, 102), capable of moving relative to the housing (4) along a first direction between a protruded location and a retracted location, wherein when the clip (101, 102) is at the protruded location, the clip (101, 102) is located outside the housing (4) and is configured to snap into a power distribution unit (22), and when the clip (101, 102) is at the retracted location, the clip (101, 102) is located inside the housing (4), to be detached from the power distribution unit (22);
a traction part (9), capable of moving relative to the housing (4) along a second direction, wherein the second direction is perpendicular to the first direction, the traction part (9) has a first end and a second end that are opposite to each other, the first end is located inside the housing (4), the second end is located outside the housing (4), when the clip (101, 102) is at the protruded location, the first end presses against the clip (101, 102), and when the clip (101, 102) is at the retracted location, the first end is detached from the clip (101, 102);
a first elastic part (13), capable of applying an elastic force to the traction part (9), so that the first end presses against the clip (101, 102) and applies a pushing force toward the outside of the housing (4) to the clip (101, 102), and the clip (101, 102) is at the protruded location; and
a second elastic part (14), capable of applying an elastic force to the clip (101, 102), wherein when the traction part (9) is pulled and the first end is detached from the clip (101, 102), the second elastic part (14) can make the clip (101, 102) restore from the retracted location to the protruded location.

7. The circuit breaker according to claim 6, wherein the clip (101, 102) comprises a first clip (101) and a second clip (102), and the first clip (101) and the second clip (102) are arranged opposite to each other on two sides of the traction part (9).

8. The circuit breaker according to any one of claims 1 to 7, wherein a plug hole (15) is provided on the housing (4), the plug hole (15) is used for plugging a clamping plate (23) of the power distribution unit (22), a third elastic part (16) is disposed in the plug hole (15), and elastic deformation of the third elastic part (16) can enable the clamping plate (23) to be clamped into the plug hole (15).

9. The circuit breaker according to any one of claims 1 to 8, wherein a first wire entry terminal (406), a second wire entry terminal (407), a first wire exit terminal (410), a second wire exit terminal (411), a first conversion terminal (408) and a second conversion terminal (409) are provided on the housing (4), the first conversion terminal (408) is configured to be electrically connect to a first conversion terminal of another circuit breaker by using a first conversion metal sheet (24), and the second conversion terminal (409) is configured to be electrically connect to a second conversion terminal of the another circuit breaker by using a second conversion metal sheet (25); and
a first metal busbar (8) and a second metal busbar (18) are disposed in the housing (4), wherein the first metal busbar (8) is electrically connected to the first wire entry terminal (406), the first conversion terminal (408), and a local output terminal located in the housing (4), and the second metal busbar (18) is electrically connected to the second wire entry terminal (407), the second conversion terminal (409), and the fixed contact plate (03, 3).

10. The circuit breaker according to claim 9, further comprising:
a first fastener and/or a second fastener, wherein
the first fastener is configured to fasten the first conversion metal sheet (24) to the first conversion terminal (408), and can fasten the first entry wire (26) to the first wire entry terminal (406); and
the second fastener is configured to fasten the second conversion metal sheet (25) to the second conversion terminal (409), and can fasten the second entry wire (27) to the second wire entry terminal (407).

11. The circuit breaker according to claim 10, wherein the first fastener comprises:
a first screw rod (6), wherein a first end of two opposite ends of the first screw rod (6) is located outside the housing (4), a second end extends into the housing (4) through a through hole on a first terminal (801) of the first metal busbar (8), and the first terminal (801) of the first metal busbar (8) is a terminal, inserted into the first conversion terminal (408), of the first metal busbar (8);
a first metal clamping bar (501), disposed at a location close to the first end of the first screw rod (6), the first metal clamping bar (501) is fixed relative to the first screw rod (6), and the first metal clamping bar (501) is located between the first terminal (801) of the first metal busbar (8) and the first end of the first screw rod (6); and
a first metal wire frame (7), disposed at a location close to the second end of the first screw rod (6), a cavity (701, 702) is formed in the first metal wire frame (7), and a second terminal (802) of the first metal busbar (8) extends into the cavity (701, 702), so that the cavity (701, 702) forms a first cavity (701) and a second cavity (702); the second end of the first screw rod (6) extends into the first cavity (701) through the first metal wire frame (7), and the first metal wire frame (7) and the first screw rod (6) are in threaded fit; and the second cavity (702) can allow insertion of the first entry wire (26), and the second terminal (802) of the first metal busbar (8) is a terminal, inserted into the first wire entry terminal (406), of the first metal busbar (8).

12. The circuit breaker according to claim 11, further comprising:
a first insulation baffle plate (502), connected to the first metal clamping bar (501), and when the first screw rod (6) moves along an extension direction of the first screw rod (6), the first metal clamping bar (501) and the first insulation baffle plate (502) can be driven to move synchronously, so that the first insulation baffle plate (502) moves and covers an opening of the first conversion terminal (408).

13. A power distribution system, comprising:
a plurality of circuit breakers according to any one of claims 1 to 12; and
a power distribution unit (22); and the plurality of circuit breakers are disposed in the power distribution unit (22), and the plurality of circuit breakers are arranged side by side.

14. The power distribution system according to claim 13, wherein the housing (4) has a bottom surface (401) and a top surface (402) that are opposite to each other, and a front side surface (403) and a rear side surface (404) that are located between the bottom surface (401) and the top surface (402) and that are opposite to each other, the crank arm (12), the jumper subboard assembly (13), the diversion plate (14), and the movable contact plate (02, 2) are arranged in a direction from the front side surface (403) to the rear side surface (404), and the rear side surface (404) of the housing (4) faces a rear wall of the power distribution unit (22).

15. The power distribution system according to claim 13 or 14, wherein when a first wire entry terminal (406), a second wire entry terminal (407), a first wire exit terminal (410), a second wire exit terminal (411), a first conversion terminal (408), and a second conversion terminal (409) are provided on the housing (4), the power distribution unit (22) is electrically connected to the first wire entry terminal (406) through a first entry wire (26), and is electrically connected to the second wire entry terminal (407) through a second entry wire (27); and the power distribution system further comprises:
a first conversion metal sheet (24), electrically connected to first conversion terminals of two adjacent circuit breakers; and
a second conversion metal sheet (25), electrically connected to second conversion terminals of the two adjacent circuit breakers.

## Patentansprüche

1. Schutzschalter, umfassend ein Gehäuse (4) und einen Verbindungsmechanismus (01, 1), eine bewegbare Kontaktplatte (02, 2) und eine feste Kontaktplatte (03, 3), die in dem Gehäuse (4) angeordnet sind, wobei der Verbindungsmechanismus (01, 1) mit der bewegbaren Kontaktplatte (02, 2) verbunden ist, um die bewegbare Kontaktplatte (02, 2) und die feste Kontaktplatte (03, 3) zu steuern, um zwischen einem Einschaltzustand und einem Ausschaltzustand umzuschalten, und der Verbindungsmechanismus (01, 1) Folgendes umfasst:
eine Befestigungsplatte (11);
ein Kurbelarm (12), der an der Befestigungsplatte (11) angelenkt ist;
eine Jumper-Unterplattenbaugruppe (13), die an dem Kurbelarm (12) angelenkt ist; und
eine Umlenkplatte (14), die separat an der Jumper-Unterplattenbaugruppe (13), an der bewegbaren Kontaktplatte (02, 2) und über eine Drehplatte an der Befestigungsplatte (11) angelenkt ist; und ein Scharniergelenk zwischen der Umlenkplatte (14) und der Jumper-Unterplattenbaugruppe (13), ein Scharniergelenk zwischen der Umlenkplatte (14) und der bewegbaren Kontaktplatte (02, 2) sowie ein Scharniergelenk zwischen der Umlenkplatte (14) und der Befestigungsplatte (11) in einer Dreiecksform angeordnet sind; und
die bewegbare Kontaktplatte (02, 2) ein streifenförmiges Loch (201) aufweist; eine Oberfläche, auf welcher die bewegbare Kontaktplatte (02, 2) und die feste Kontaktplatte (03, 3) in Kontakt kommen, eine Kontaktebene ist; eine Ausdehnungsrichtung des streifenförmigen Lochs (201) nicht parallel zu der Kontaktebene verläuft, eine Drehwelle (17) durch das streifenförmige Loch (201) verläuft, und sich die bewegbare Kontaktplatte (02, 2) relativ zu der Drehwelle entlang der Ausdehnungsrichtung des streifenförmigen Lochs (201) bewegen kann;
die Umlenkplatte (14) Folgendes umfasst:
eine erste Platte (141) und eine zweite Platte (142), die einander gegenüberliegen, und die erste Platte (141) und die zweite Platte (142) unter Verwendung einer Verbindungsplatte (143) verbunden sind; und
die erste Platte (141) und die zweite Platte (142) mit einem ersten Scharnierloch (144), einem zweiten Scharnierloch (145) und einem dritten Scharnierloch (146) versehen sind, die in einer Dreiecksform angeordnet sind, die Drehwelle (17) durch das erste Scharnierloch (144) auf der ersten Platte (141) und das erste Scharnierloch (144) auf der zweiten Platte (142) verläuft und durch das streifenförmige Loch (201) verläuft; eine erste Scharnierwelle (15) in dem zweiten Scharnierloch (145) angeordnet ist und mit der Jumper-Unterplattenbaugruppe (13) angelenkt ist; und eine zweite Scharnierwelle (16) in dem dritten Scharnierloch (146) angeordnet ist und mit der bewegbaren Kontaktplatte (02, 2) angelenkt ist;
**dadurch gekennzeichnet, dass**
sich ein Teil der bewegbaren Kontaktplatte (02, 2), der an der Umlenkplatte (14) angelenkt ist, zwischen der ersten Platte (141) und der zweiten Platte (142), die einander gegenüberliegen, befindet, und sich ein Teil der Jumper-Unterplattenbaugruppe (13), der an der Umlenkplatte (14) angelenkt ist, zwischen der ersten Platte (141) und der zweiten Platte (142), die einander gegenüberliegen, befindet.

2. Schutzschalter nach Anspruch 1, wobei die Ausdehnungsrichtung des streifenförmigen Lochs (201) senkrecht zu der Kontaktebene verläuft.

3. Schutzschalter nach einem der Ansprüche 1 oder 2, wobei das Gehäuse (4) eine untere Fläche (401) und obere Fläche (402), die einander gegenüberliegen, und eine vordere Seitenfläche (403) und eine hintere Seitenfläche (404), die sich zwischen der unteren Fläche (401) und der oberen Fläche (402) befinden und die einander gegenüberliegen, aufweist, der Kurbelarm (12), die Jumper-Unterplattenbaugruppe (13), die Umlenkplatte (14) und die bewegbare Kontaktplatte (02, 2) in einer Richtung von der vorderen Seitenfläche (403) zu der hinteren Seitenfläche (404) angeordnet sind, ein Lichtbogen, der erzeugt wird, wenn die bewegbare Kontaktplatte (02, 2) von der festen Kontaktplatte (03, 3) gelöst ist, zu der hinteren Seitenfläche (404) abgeleitet werden kann, ein Auslassloch (405) auf der hinteren Seitenfläche (404) bereitgestellt ist, und das Auslassloch (405) dazu konfiguriert ist, Gas abzuleiten, das durch den Lichtbogen erzeugt wird, wenn die bewegbare Kontaktplatte (02, 2) von der festen Kontaktplatte (03, 3) gelöst ist.

4. Schutzschalter nach Anspruch 3, ferner umfassend:
eine Lichtbogenkammer (28), die an einer Position in dem Gehäuse (4) angeordnet ist, die der bewegbaren Kontaktplatte (02, 2) entspricht und in der Nähe der hinteren Seitenfläche (404) des Gehäuses (4) liegt; und
eine Lichtbogenschlagplatte (29), die auf einer Seite der Lichtbogenkammer (28) angeordnet ist, die in der Nähe der Bodenfläche (401) liegt, wobei die Lichtbogenschlagplatte (29) einen flachen Abschnitt (291) und einen gebogenen Abschnitt (292) umfasst, der flache Abschnitt (291) auf der festen Kontaktplatte (03, 3) montiert ist und der gebogene Abschnitt (292) in einer Richtung zu der Lichtbogenkammer (28) hin gebogen ist.

5. Schutzschalter nach Anspruch 4, ferner umfassend:
eine Lichtbogenabsorptionsplatte (30), die auf einer Seite der Lichtbogenkammer (28) angeordnet ist, die in der Nähe der oberen Fläche (402) liegt, wobei die Lichtbogenabsorptionsplatte (30) aus einem Metallmaterial hergestellt ist und ein Filterloch (301) auf der Lichtbogenabsorptionsplatte (30) bereitgestellt ist.

6. Schutzschalter nach einem der Ansprüche 1 bis 5, ferner umfassend:
eine Befestigungsklemme (101, 102), die in der Lage ist, sich relativ zu dem Gehäuse (4) entlang einer ersten Richtung zwischen einer hervorstehenden Position und einer eingefahrenen Position zu bewegen, wobei sich die Befestigungsklemme (101, 102), wenn die Befestigungsklemme (101, 102) in der hervorstehenden Position steht, außerhalb des Gehäuses (4) befindet und dazu konfiguriert ist, in eine Stromverteilungseinheit (22) einzurasten, und sich die Befestigungsklemme (101, 102), wenn die Befestigungsklemme (101, 102) in der eingefahrenen Position steht, im Inneren des Gehäuses (4) befindet, um von der Stromverteilungseinheit (22) gelöst zu werden;
ein Zugteil (9), das in der Lage ist, sich relativ zu dem Gehäuse (4) entlang einer zweiten Richtung zu bewegen, wobei die zweite Richtung senkrecht zu der ersten Richtung verläuft, das Zugteil (9) ein erstes Ende und ein zweites Ende aufweist, die einander gegenüberliegen, sich das erste Ende im Inneren des Gehäuses (4) befindet, sich das zweite Ende außerhalb des Gehäuses (4) befindet, wenn die Befestigungsklemme (101, 102) in der hervorstehenden Position steht, das erste Ende gegen die Befestigungsklemme (101, 102) drückt, und, wenn die Befestigungsklemme (101, 102) in der eingefahrenen Position steht, das erste Ende von der Befestigungsklemme (101, 102) gelöst ist;
ein erstes elastisches Teil (13), das in der Lage ist, eine Spannkraft auf das Zugteil (9) auszuüben, sodass das erste Ende gegen die Befestigungsklemme (101, 102) drückt und eine Druckkraft in Richtung der Außenseite des Gehäuses (4) auf die Befestigungsklemme (101, 102) ausübt, und die Befestigungsklemme (101, 102) in der hervorstehenden Position steht; und
ein zweites elastisches Teil (14), das in der Lage ist, eine Spannkraft auf die Befestigungsklemme (101, 102) auszuüben, wobei das zweite elastische Teil (14) die Befestigungsklemme (101, 102) aus der eingezogenen Position in die hervorstehende Position zurückführen kann, wenn das Zugteil (9) gezogen wird und das erste Ende von der Befestigungsklemme (101, 102) gelöst ist.

7. Schutzschalter nach Anspruch 6, wobei die Befestigungsklemme (101, 102) eine erste Befestigungsklemme (101) und eine zweite Befestigungsklemme (102) umfasst, und die erste Befestigungsklemme (101) und die zweite Befestigungsklemme (102) gegenüber einander auf zwei Seiten des Zugteils (9) angeordnet sind.

8. Schutzschalter nach einem der Ansprüche 1 bis 7, wobei ein Spundloch (15) an dem Gehäuse (4) bereitgestellt ist, das Spundloch (15) zum Einstecken einer Klemmplatte (23) der Stromverteilungseinheit (22) verwendet wird, ein drittes elastisches Teil (16) in dem Spundloch (15) angeordnet ist, und die elastische Verformung des dritten elastischen Teils (16) das Einklemmen der Klemmplatte (23) in das Spundloch (15) ermöglichen kann.

9. Schutzschalter nach einem der Ansprüche 1 bis 8, wobei ein erster Kabeleingangsanschluss (406), ein zweiter Kabeleingangsanschluss (407), ein erster Kabelausgangsanschluss (410), ein zweiter Kabelausgangsanschluss (411), ein erster Umwandlungsanschluss (408) und ein zweiter Umwandlungsanschluss (409) an dem Gehäuse (4) bereitgestellt sind, der erste Umwandlungsanschluss (408) dazu konfiguriert ist, unter Verwendung eines ersten Umwandlungsmetallblechs (24) elektrisch mit einem ersten Umwandlungsanschluss eines anderen Schutzschalters verbunden zu werden, und der zweite Umwandlungsanschluss (409) dazu konfiguriert ist, unter Verwendung eines zweiten Umwandlungsmetallblechs (25) elektrisch mit einem zweiten Umwandlungsanschluss des anderen Schutzschalters verbunden zu werden; und
eine erste Metallsammelschiene (8) und eine zweite Metallsammelschiene (18) in dem Gehäuse (4) angeordnet sind, wobei die erste Metallsammelschiene (8) elektrisch mit dem ersten Kabeleingangsanschluss (406), dem ersten Umwandlungsanschluss (408) und einem lokalen Ausgangsanschluss, der sich in dem Gehäuse (4) befindet, verbunden ist und die zweite Metallsammelschiene (18) elektrisch mit dem zweiten Kabeleingangsanschluss (407), dem zweiten Umwandlungsanschluss (409) und der festen Kontaktplatte (03, 3) verbunden ist.

10. Schutzschalter nach Anspruch 9, ferner umfassend:
ein erstes Befestigungselement und/oder ein zweites Befestigungselement, wobei
das erste Befestigungselement dazu konfiguriert ist, das erste Umwandlungsmetallblech (24) an dem ersten Umwandlungsanschluss (408) zu befestigen, und das erste Eingangskabel (26) an dem ersten Kabeleingangsanschluss (406) befestigen kann; und
das zweite Befestigungselement dazu konfiguriert ist, das zweite Umwandlungsmetallblech (25) an dem zweiten Umwandlungsanschluss (409) zu befestigen, und das zweite Eingangskabel (27) an dem zweiten Kabeleingangsanschluss (407) befestigen kann.

11. Schutzschalter nach Anspruch 10, wobei das erste Befestigungselement Folgendes umfasst:
eine erste Gewindestange (6), wobei sich ein erstes Ende der zwei gegenüberliegenden Enden der ersten Gewindestange (6) außerhalb des Gehäuses (4) befindet, sich ein zweites Ende durch ein Durchgangsloch hindurch an einem ersten Anschluss (801) der ersten Metallsammelschiene (8) in das Gehäuse (4) erstreckt, und der erste Anschluss (801) der ersten Metallsammelschiene (8) ein Anschluss ist, der in den ersten Umwandlungsanschluss (408) der ersten Metallsammelschiene (8) eingeführt ist;
eine erste Metallklemmleiste (501), die an einer Position in der Nähe des ersten Endes der ersten Gewindestange (6) angeordnet ist, die erste Metallklemmleiste (501) relativ zu der ersten Gewindestange (6) befestigt ist, und sich die erste Metallklemmleiste (501) zwischen dem ersten Anschluss (801) der ersten Metallsammelschiene (8) und dem ersten Ende der ersten Gewindestange (6) befindet; und
einen ersten Metalldrahtrahmen (7), der an einer Position in der Nähe des zweiten Endes der ersten Gewindestange (6) angeordnet ist, ein Hohlraum (701, 702) in dem ersten Metalldrahtrahmen (7) ausgebildet ist, und sich ein zweiter Anschluss (802) der ersten Metallsammelschiene (8) in den Hohlraum (701, 702) hinein erstreckt, sodass der Hohlraum (701, 702) einen ersten Hohlraum (701) und einen zweiten Hohlraum (702) ausbildet; sich das zweite Ende der ersten Gewindestange (6) über den ersten Metalldrahtrahmen (7) in den ersten Hohlraum (701) hinein erstreckt, und der erste Metalldrahtrahmen (7) und die erste Gewindestange (6) in Gewindepassung stehen; und der zweite Hohlraum (702) das Einführen des ersten Eingangskabels (26) ermöglichen kann, und der zweite Anschluss (802) der ersten Metallsammelschiene (8) ein Anschluss ist, der in den ersten Kabeleingangsanschluss (406) der ersten Metallsammelschiene (8) eingeführt ist.

12. Schutzschalter nach Anspruch 11, ferner umfassend:
eine erste Isolierblende (502), die mit der ersten Metallklemmleiste (501) verbunden ist, und die erste Metallklemmleiste (501) und die erste Isolierblende (502) angetrieben werden können, um sich synchron zu bewegen, wenn sich die erste Gewindestange (6) entlang einer Ausdehnungsrichtung der ersten Gewindestange (6) bewegt, sodass sich die erste Isolierblende (502) bewegt und eine Öffnung des ersten Umwandlungsanschlusses (408) abdeckt.

13. Stromverteilungssystem, umfassend:
eine Vielzahl von Schutzschaltern nach einem der Ansprüche 1 bis 12; und
eine Stromverteilungseinheit (22); und wobei die Vielzahl von Schutzschaltern in der Stromverteilungseinheit (22) angeordnet ist, und die Vielzahl von Schutzschaltern nebeneinander angeordnet ist.

14. Stromverteilungssystem nach Anspruch 13, wobei das Gehäuse (4) eine untere Fläche (401) und eine obere Fläche (402) aufweist, die einander gegenüberliegen, und eine vordere Seitenfläche (403) und eine hintere Seitenfläche (404) aufweist, die zwischen der unteren Fläche (401) und der oberen Fläche (402) angeordnet sind und die einander gegenüberliegen, der Kurbelarm (12), die Jumper-Unterplattenbaugruppe (13), die Umlenkplatte (14) und die bewegbare Kontaktplatte (02,2) in einer Richtung von der vorderen Seitenfläche (403) zu der hinteren Seitenfläche (404) angeordnet sind, und die hintere Seitenfläche (404) des Gehäuses (4) einer Rückwand der Stromverteilungseinheit (22) zugewandt ist.

15. Stromverteilungssystem nach Anspruch 13 oder 14, wobei die Stromverteilungseinheit (22) über ein erstes Eingangskabel (26) mit dem ersten Kabeleingangsanschluss (406) elektrisch verbunden ist und über ein zweites Eingangskabel (27) mit dem zweiten Kabeleingangsanschluss (407) elektrisch verbunden ist, wenn ein erster Kabeleingangsanschluss (406), ein zweiter Kabeleingangsanschluss (407), ein erster Kabelausgangsanschluss (410), ein zweiter Kabelausgangsanschluss (411), ein erster Umwandlungsanschluss (408), und ein zweiter Umwandlungsanschluss (409) an dem Gehäuse (4) bereitgestellt sind; und das Stromverteilungssystem ferner Folgendes umfasst:
ein erstes Umwandlungsmetallblech (24), das elektrisch mit den ersten Umwandlungsanschlüssen von zwei benachbarten Schutzschaltern verbunden ist; und
ein zweites Umwandlungsmetallblech (25), das elektrisch mit den zweiten Umwandlungsanschlüssen der zwei benachbarten Schutzschalter verbunden ist.

## Revendications

1. Disjoncteur comprenant un boîtier (4), et un mécanisme de liaison (01, 1), une plaque de contact mobile (02, 2) et une plaque de contact fixe (03, 3) qui sont disposées dans le boîtier (4), dans lequel le mécanisme de liaison (01, 1) est connecté à la plaque de contact mobile (02, 2) pour commander la commutation de la plaque de contact mobile (02, 2) et de la plaque de contact fixe (03, 3) entre un état ouvert et un état fermé, et le mécanisme de liaison (01, 1) comprend :
une plaque de fixation (11) ;
un bras de manivelle (12), articulé sur la plaque de fixation (11) ;
un ensemble de sous-carte de cavalier (13), articulé sur le bras de manivelle (12) ; et
une plaque de déviation (14), articulée séparément à l'ensemble de sous-carte de cavalier (13), à la plaque de contact mobile (02, 2), et par l'intermédiaire d'une plaque rotative, à la plaque de fixation (11) ; et une articulation à charnière entre la plaque de déviation (14) et l'ensemble de sous-carte de cavalier (13), une articulation à charnière entre la plaque de déviation (14) et la plaque de contact mobile (02, 2), et une articulation à charnière entre la plaque de déviation (14) et la plaque de fixation (11) sont disposées en forme triangulaire ; et
la plaque de contact mobile (02, 2) a un trou en forme de bande (201), une surface sur laquelle la plaque de contact mobile (02, 2) et la plaque de contact fixe (03, 3) entrent en contact est un plan de contact, une direction d'extension du trou en forme de bande (201) n'est pas parallèle au plan de contact, un arbre de rotation (17) passe à travers le trou en forme de bande (201), et la plaque de contact mobile (02, 2) peut se déplacer par rapport à l'arbre de rotation le long de la direction d'extension du trou en forme de bande (201) ;
la plaque de déviation (14) comprend :
une première plaque (141) et une seconde plaque (142) qui sont opposées l'une à l'autre, et la première plaque (141) et la seconde plaque (142) sont connectées à l'aide d'une plaque de liaison (143) ; et
la première plaque (141) et la seconde plaque (142) sont pourvues d'un premier trou de charnière (144), d'un deuxième trou de charnière (145) et d'un troisième trou de charnière (146) qui sont disposés en forme triangulaire, l'arbre rotatif (17) traverse le premier trou de charnière (144) de la première plaque (141) et le premier trou de charnière (144) de la seconde plaque (142), et traverse le trou en forme de bande (201), ; un premier arbre de charnière (15) est disposé dans le deuxième trou de charnière (145) et est articulé à l'ensemble de sous-carte de cavalier (13) ; et un second arbre de charnière (16) est disposé dans le troisième trou de charnière (146) et est articulé à la plaque de contact mobile (02, 2) ;
**caractérisé en ce que**
une partie de la plaque de contact mobile (02, 2), qui est articulée à la plaque de déviation (14), est située entre la première plaque (141) et la seconde plaque (142) qui sont opposées l'une à l'autre, et une partie de l'ensemble de sous-carte de cavalier (13), qui est articulée à la plaque de déviation (14), est située entre la première plaque (141) et la seconde plaque (142) qui sont opposées l'une à l'autre.

2. Disjoncteur selon la revendication 1, dans lequel la direction d'extension du trou en forme de bande (201) est perpendiculaire au plan de contact.

3. Disjoncteur selon l'une quelconque des revendications 1 et 2, dans lequel le boîtier (4) a une surface inférieure (401) et une surface supérieure (402) qui sont opposées l'une à l'autre, et a une surface latérale avant (403) et une surface latérale arrière (404) qui sont situées entre la surface inférieure (401) et la surface supérieure (402) et qui sont opposées l'une à l'autre, le bras de manivelle (12), l'ensemble de sous-carte de cavalier (13), la plaque de déviation (14) et la plaque de contact mobile (02, 2) sont disposés dans une direction allant de la surface latérale avant (403) à la surface latérale arrière (404), un arc électrique produit lorsque la plaque de contact mobile (02, 2) est détachée de la plaque de contact fixe (03, 3) peut être évacué vers la surface latérale arrière (404), un trou d'évacuation (405) est prévu sur la surface latérale arrière (404), et le trou d'évacuation (405) est configuré pour évacuer les gaz produits par l'arc électrique lorsque la plaque de contact mobile (02, 2) est détachée de la plaque de contact fixe (03, 3).

4. Disjoncteur selon la revendication 3, comprenant également :
une goulotte d'arc (28), disposée au niveau d'un emplacement, dans le boîtier (4), qui correspond à la plaque de contact mobile (02, 2), et est proche de la surface latérale arrière (404) du boîtier (4) ; et
une plaque de frappe d'arc (29), disposée sur un côté, de la goulotte d'arc (28), qui est proche de la surface inférieure (401), dans lequel la plaque de frappe d'arc (29) comprend une section plate (291) et une section pliée (292), la section plate (291) est montée sur la plaque de contact fixe (03, 3), et la section pliée (292) est pliée dans une direction vers la goulotte d'arc (28).

5. Disjoncteur selon la revendication 4, comprenant également : une plaque d'absorption d'arc (30), disposée sur un côté, de la goulotte d'arc (28), qui est proche de la surface supérieure (402), dans lequel la plaque d'absorption d'arc (30) est constituée d'un matériau métallique, et un trou de filtre (301) est prévu sur la plaque d'absorption d'arc (30).

6. Disjoncteur selon l'une quelconque des revendications 1 à 5, comprenant également :
une agrafe (101, 102), capable de se déplacer par rapport au boîtier (4) le long d'une première direction entre un emplacement saillant et un emplacement rétracté, dans lequel lorsque l'agrafe (101, 102) est au niveau de l'emplacement saillant, l'agrafe (101, 102) est située à l'extérieur du boîtier (4) et est configurée pour s'encliqueter dans une unité de distribution de puissance (22), et lorsque l'agrafe (101, 102) est au niveau de l'emplacement rétracté, l'agrafe (101, 102) est située à l'intérieur du boîtier (4), pour être détachée de l'unité de distribution de puissance (22) ;
une partie de traction (9), capable de se déplacer par rapport au boîtier (4) le long d'une seconde direction, dans lequel la seconde direction est perpendiculaire à la première direction, la partie de traction (9) a une première extrémité et une seconde extrémité qui sont opposées l'une à l'autre, la première extrémité est située à l'intérieur du boîtier (4), la seconde extrémité est située à l'extérieur du boîtier (4), lorsque l'agrafe (101, 102) est au niveau de l'emplacement saillant, la première extrémité appuie contre l'agrafe (101, 102), et lorsque l'agrafe (101, 102) est au niveau de l'emplacement rétracté, la première extrémité est détachée de l'agrafe (101, 102) ;
une première partie élastique (13), capable d'appliquer une force élastique à la partie de traction (9), de sorte que la première extrémité appuie contre l'agrafe (101, 102) et applique une force de poussée vers l'extérieur du boîtier (4) à l'agrafe (101, 102), et l'agrafe (101, 102) est au niveau de l'emplacement saillant ; et
une deuxième partie élastique (14), capable d'appliquer une force élastique à l'agrafe (101, 102), dans lequel lorsque la partie de traction (9) est tirée et que la première extrémité est détachée de l'agrafe (101, 102), la deuxième partie élastique (14) peut faire revenir l'agrafe (101, 102) de l'emplacement rétracté à l'emplacement saillant.

7. Disjoncteur selon la revendication 6, dans lequel l'agrafe (101, 102) comprend une première agrafe (101) et une seconde agrafe (102), et la première agrafe (101) et la seconde agrafe (102) sont disposées opposées l'une à l'autre de deux côtés de la partie de traction (9).

8. Disjoncteur selon l'une quelconque des revendications 1 à 7, dans lequel un trou de bouchon (15) est prévu sur le boîtier (4), le trou de bouchon (15) est utilisé pour boucher une plaque de serrage (23) de l'unité de distribution de puissance (22), une troisième partie élastique (16) est disposée dans le trou de bouchon (15), et la déformation élastique de la troisième partie élastique (16) peut permettre à la plaque de serrage (23) d'être serrée dans le trou de bouchon (15).

9. Disjoncteur selon l'une quelconque des revendications 1 à 8, dans lequel une première borne d'entrée de fil (406), une seconde borne d'entrée de fil (407), une première borne de sortie de fil (410), une seconde borne de sortie de fil (411), une première borne de conversion (408) et une seconde borne de conversion (409) sont prévues sur le boîtier (4), la première borne de conversion (408) est configurée pour être connectée électriquement à une première borne de conversion d'un autre disjoncteur à l'aide d'une première tôle de conversion (24), et la seconde borne de conversion (409) est configurée pour être connectée électriquement à une seconde borne de conversion de l'autre disjoncteur à l'aide d'une seconde tôle de conversion (25) ; et
une première barre omnibus métallique (8) et une seconde barre omnibus métallique (18) sont disposées dans le boîtier (4), dans lequel la première barre omnibus métallique (8) est connectée électriquement à la première borne d'entrée de fil (406), à la première borne de conversion (408) et à une borne de sortie locale située dans le boîtier (4), et la seconde barre omnibus métallique (18) est connectée électriquement à la seconde borne d'entrée de fil (407), à la seconde borne de conversion (409) et à la plaque de contact fixe (03, 3).

10. Disjoncteur selon la revendication 9, comprenant également :
une première fixation et/ou une seconde fixation, dans lequel la première fixation est configurée pour fixer la première tôle de conversion (24) à la première borne de conversion (408), et peut fixer le premier fil d'entrée (26) à la première borne d'entrée de fil (406) ; et
la seconde fixation est configurée pour fixer la seconde tôle de conversion (25) à la seconde borne de conversion (409) et peut fixer le second fil d'entrée (27) à la seconde borne d'entrée de fil (407).

11. Disjoncteur selon la revendication 10, dans lequel la première fixation comprend :
une première tige filetée (6), dans lequel une première extrémité de deux extrémités opposées de la première tige filetée (6) est située à l'extérieur du boîtier (4), une seconde extrémité se prolonge dans le boîtier (4) à travers un trou traversant sur une première borne (801) de la première barre omnibus métallique (8), et la première borne (801) de la première barre omnibus métallique (8) est une borne, insérée dans la première borne de conversion (408), de la première barre omnibus métallique (8) ;
une première barre de serrage métallique (501), disposée au niveau d'un emplacement proche de la première extrémité de la première tige filetée (6), la première barre de serrage métallique (501) est fixée par rapport à la première tige filetée (6), et la première barre de serrage métallique (501) est située entre la première borne (801) de la première barre omnibus métallique (8) et la première extrémité de la première tige filetée (6) ; et
un premier cadre en fil métallique (7), disposé au niveau d'un emplacement proche de la seconde extrémité de la première tige filetée (6), une cavité (701, 702) est formée dans le premier cadre en fil métallique (7), et une seconde borne (802) de la première barre omnibus métallique (8) se prolonge dans la cavité (701, 702), de sorte que la cavité (701, 702) forme une première cavité (701) et une seconde cavité (702) ; la seconde extrémité de la première tige filetée (6) se prolonge dans la première cavité (701) à travers le premier cadre en fil métallique (7), et le premier cadre en fil métallique (7) et la première tige filetée (6) sont en ajustement fileté ; et la seconde cavité (702) permet l'insertion du premier fil d'entrée (26), et la seconde borne (802) de la première barre omnibus métallique (8) est une borne, insérée dans la première borne d'entrée de fil (406), de la première barre omnibus métallique (8).

12. Disjoncteur selon la revendication 11, comprenant également :
une première plaque de déflecteur d'isolation (502), connectée à la première barre de serrage métallique (501), et lorsque la première tige filetée (6) se déplace le long d'une direction d'extension de la première tige filetée (6), la première barre de serrage métallique (501) et la première plaque de déflecteur d'isolation (502) peuvent être entraînées à se déplacer de manière synchrone, de sorte que la première plaque de déflecteur d'isolation (502) se déplace et couvre une ouverture de la première borne de conversion (408).

13. Système de distribution de puissance, comprenant :
une pluralité de disjoncteurs selon l'une quelconque des revendications 1 à 12 ; et
une unité de distribution de puissance (22) ; et la pluralité de disjoncteurs sont disposés dans l'unité de distribution de puissance (22), et la pluralité de disjoncteurs sont disposés côte à côte.

14. Système de distribution de puissance selon la revendication 13, dans lequel le boîtier (4) a une surface inférieure (401) et une surface supérieure (402) qui sont opposées l'une à l'autre, et a une surface latérale avant (403) et une surface latérale arrière (404) qui sont situées entre la surface inférieure (401) et la surface supérieure (402) et qui sont opposées l'une à l'autre, le bras de manivelle (12), l'ensemble de sous-carte de cavalier (13), la plaque de déviation (14) et la plaque de contact mobile (02,2) sont disposés dans une direction allant de la surface latérale avant (403) à la surface latérale arrière (404), et la surface latérale arrière (404) du boîtier (4) fait face à une paroi arrière de l'unité de distribution de puissance (22).

15. Système de distribution de puissance selon la revendication 13 ou 14, dans lequel, lorsqu'une première borne d'entrée de fil (406), une seconde borne d'entrée de fil (407), une première borne de sortie de fil (410), une seconde borne de sortie de fil (411), une première borne de conversion (408) et une seconde borne de conversion (409) sont prévues sur le boîtier (4), l'unité de distribution de puissance (22) est connectée électriquement à la première borne d'entrée de fil (406) par l'intermédiaire d'un premier fil d'entrée (26), et est connectée électriquement à la seconde borne d'entrée de fil (407) par l'intermédiaire d'un second fil d'entrée (27) ; et le système de distribution de puissance comprend également :
une première tôle de conversion (24), connectée électriquement aux premières bornes de conversion de deux disjoncteurs adjacents ; et
une seconde tôle de conversion (25), connectée électriquement aux secondes bornes de conversion des deux disjoncteurs adjacents.
